# EUROPEAN PATENT SPECIFICATION

(11) **EP 3 527 042 B1**
(45) Date of publication and mention of the grant of the patent: **24.02.2021**
(21) Application number: 17781132.0
(22) Date of filing: 11.10.2017
(51) Int. Cl.: H05B 6/64

(54) **SENSOR ASSEMBLY FOR A COOKING CHAMBER OF A MICROWAVE OVEN AND METHOD FOR CONTROLLING ENERGY CONSUMPTION OF SUCH SENSOR ASSEMBLY**
SENSORANORDNUNG FÜR EINEN GARRAUM EINES MIKROWELLENOFENS UND VERFAHREN ZUR STEUERUNG DES ENERGIEVERBRAUCHS EINER SOLCHEN SENSORANORDNUNG
ENSEMBLE CAPTEUR POUR UNE ENCEINTE DE CUISSON D'UN FOUR À MICRO-ONDES ET PROCÉDÉ DE CONTRÔLE DE LA CONSOMMATION D'ÉNERGIE D'UN TEL ENSEMBLE CAPTEUR

(30) Priority: 12.10.2016 EP 16193427
(43) Date of publication of application: 21.08.2019
(73) Proprietor: Danmarks Tekniske Universitet, 2800 Kgs. Lyngby (DK)
(72) Inventor: LINDBERG-POULSEN, Kristian, 2200 Copenhagen N (DK); SCHNEIDER, Henrik, 4030 Tune (DK)
(74) Representative: Guardian IP Consulting I/S
(86) International application number: PCT/EP2017/075942
(87) International publication number: WO 2018/069395

(56) References cited:
- WO-A2-2013/123359
- GB-A- 2 119 127
- US-A- 4 088 863
- US-A- 4 297 557
- US-A1- 2009 315 727

## Description

The present invention relates to a sensor assembly for a cooking chamber of a microwave oven and a method for controlling such a sensor assembly. The sensor assembly comprises: at least one energy consuming part including a first sensor; an energy harvesting part configured to harvest energy from microwave radiation within the cooking chamber; and an energy supply part for supplying energy from the energy harvesting part to the at least one energy consuming part.

International patent application no. PCT/EP2016/057790 and international patent application no. PCT/EP2016/057791, which may fall under EPC Art. 54(3) for the present disclosure, may be considered to disclose a sensor assembly comprising: a sensor; an energy harvesting part configured to harvest energy from microwave radiation within the cooking chamber; and an energy supply part configured to supply energy from the energy harvesting part to the sensor.

US 4,297,557 discloses a microwave oven with a telemetric temperature probe embedded in a comestible held in a cooking utensil to measure food temperature. The temperature probe comprises electronic circuitry including a power supply and a temperature responsive circuit. The power supply circuit includes a loop antenna, rectification diodes and supply capacitor operating by harvesting energy from microwave energy inside the oven. A temperature signal is transmitted wirelessly by near-field magnetic coupling from an inductor antenna of the temperature probe to a receiving inductive antenna outside the oven cavity.

US 2004/0056027 discloses a kettle adapted for heating liquids in a microwave oven. The kettle is equipped with a simple temperature indicator for indicating the temperature of the contents of the boiler for example by changing colors. There is not any specific disclosure of electronic circuitry coupled to the thermometer.

US 2006/0207442 shows a container for placement in a microwave oven and wherein there is arranged a cooling device for cooling the contents of the container.

The cooling device is driven by the energy harvested from the microwaves in the oven.

Throughout the present disclosure, a microwave oven may simply be referred to as an oven. The cooking chamber of a microwave oven may be known as any of the following: cavity, oven cavity, oven chamber, and cooking cavity.

During heating, i.e. when a microwave oven is "on", standing waves may occur within the oven chamber resulting in areas with relatively high and relatively low, respectively, microwave field strength (also referred to as "power"). Accordingly, any item to be heated in a microwave oven may be subject to so-called "hot-spots" and "cold-spots", i.e. areas with relatively high and low, respectively, degree of heating. Different methods for achieving a more uniform heating (i.e. a more uniform distribution of microwave field strength across the item to be heated) over time exits, such as providing the oven with a turntable (onto which the item to be heated is to be placed) or by providing the oven with a rotational reflector for the microwave radiation. In both cases the individual areas of the item to be heated may experience a time-varying microwave field strength, e.g. by being moved in and out of hot-spots and cold-spots, or by having the hot-spots and cold-spots being moved or changed over time within the cooking chamber.

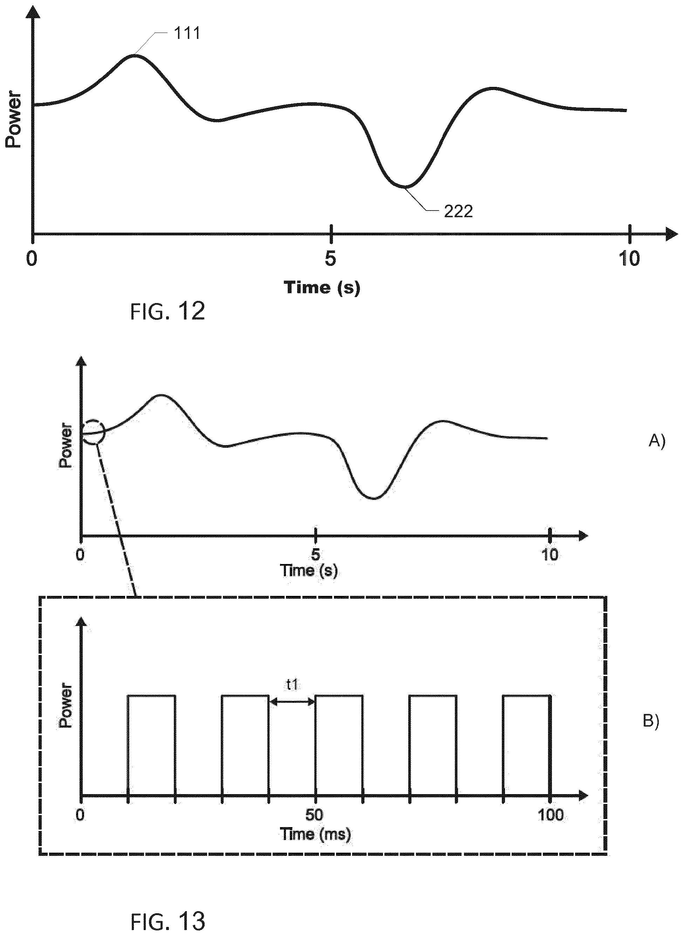

Fig. 12 illustrates an example of the microwave field strength as a function of time as applied to a first area of an item (not illustrated in Fig. 12) to be heated in a microwave oven, which item is placed on a rotating turntable during heating. For the illustrated example, the turntable rotates with a periodicity of 10 seconds. As illustrated in the figure, the first area of the item is subject to a time-varying microwave field strength and passes hot-spots 111 and cold-spots 222 while being subject to the rotational movement of the turntable.

A microwave oven is usually powered via an AC-supply (such as mains) and may consequently be generating a microwave field that is periodically off and on, according to the frequency of the AC-supply, which for mains is usually either 50 Hz or 60 Hz. A typical microwave oven utilizes a self-oscillating vacuum power tube called a magnetron and a high voltage power supply with a (single phase) half wave rectifier (often with voltage doubling) and no DC filtering. This may produce an RF (radio frequency) pulse train with a duty cycle below 50% as the tube may be completely off for half of every AC cycle, i.e. every 8.33 ms in "60 Hz countries" (i.e. countries with 60 Hz mains) and every 10 ms in "50 Hz countries". This is illustrated by means of Fig. 13. Fig. 13 A) is similar to Fig. 12. In Fig. 13 A) a section, as indicated by the circle, is enlarged and schematically illustrated in Fig. 13 B) illustrating the on/off periods. The oven is completely off for periods of 10 ms, see t1 in Fig. 13 B), (when powered by 50 Hz mains). Accordingly, as illustrated by means of Fig. 13, a microwave oven operating at a power level of 100 % is usually periodically off and on, respectively, and is usually only on for about 50 % of the time.

Operating a microwave oven at a power-level below 100% is usually achieved by periodically activating and de-activating the microwave field (i.e. switching the magnetron on and off). This switching on/off is carried out in addition to the above-mentioned usual switching caused by the AC-supply and the half wave rectifier. Accordingly, even during the active (i.e. "on") period, the oven is still subject to the above-mentioned mains frequency dependent on/off periodicity. For most ovens, the magnetron is driven by a linear transformer which can only feasibly be switched completely on or off. Usually, the choice of power level by a user of the oven does not affect the intensity of the microwave radiation; instead, the magnetron is cycled on and off, respectively, every few seconds or similar (dependent on the required power level), thus altering the large scale duty cycle. However, some ovens have inverter power supplies that use pulse-width modulation to provide effectively continuous heating at reduced power, so that the item to be heated within the oven chamber is heated more evenly at a given power level and may be heated more quickly and possibly with a reduced risk of being damaged by uneven heating.

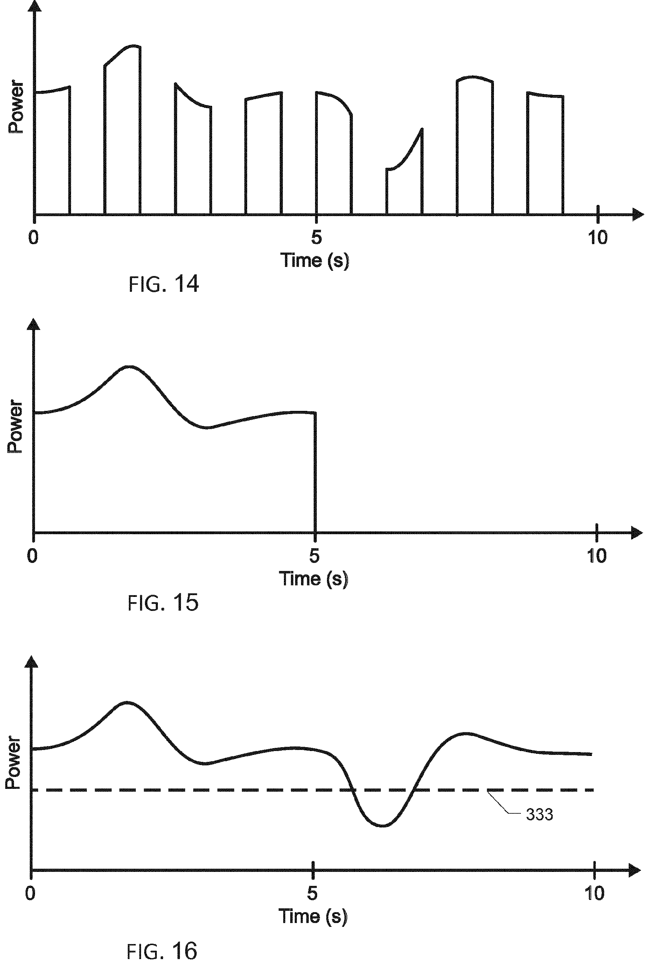

Fig. 14 illustrates the situation as described in connection with Fig. 12, but with an exemplary power level of 50 %, which for the illustrated example is achieved by alternately activating and de-activating the magnetron every 625 ms. As explained in connection with Fig. 13 B) during the active periods the magnetron will usually furthermore be de-activated for 10 ms followed by being activated for 10 ms, i.e. an activation/de-activation periodicity of 20 ms.

Additionally, whenever the magnetron is initiating a period of activation, irregular short bursts of radiation (i.e. radiation followed no radiation) may occur before the radiation from the magnetron as delivered to the cooking chamber becomes steady.

When a microwave oven is turned off, i.e. when the magnetron is turned off, the microwave field strength immediately drops to zero. Fig. 15 illustrates a situation similar to what is illustrated in Fig. 12. However, in Fig. 15, the microwave oven is turned off at time = 5 s.

Accordingly, when using a sensor assembly within a cooking chamber of a microwave oven, wherein the sensor assembly comprises an energy harvesting part configured to harvest energy from microwave radiation within the cooking chamber, the energy harvesting part may experience a time-varying microwave field, e.g. as explained in connection with Figs. 12 to 15.

Depending on the design of the sensor assembly, there may be periods of time wherein the power available for the energy harvesting part is less than what is required for the sensor assembly for being able to generate desired power supply. This may even be the case when the magnetron is activated. An example of such a situation is illustrated by example in Fig. 16. Fig. 16 illustrates a situation similar to Fig. 12 with the addition of the dashed line 333, which illustrates an example of needed available power for the energy harvesting part in order for the sensor assembly to generate the desired power. Accordingly, for the time period wherein the available power is lower than what is needed (i.e. for the illustrated example approximately from around 5,75 s to 6,75 s), the sensor assembly may not be able to generate the desired power.

Accordingly, when using a sensor assembly within a cooking chamber of a microwave oven, wherein the sensor assembly comprises an energy harvesting part configured to harvest energy from microwave radiation within the cooking chamber, there may be several situations, where insufficient power (such as "low" or "zero" power) is available. These situations may furthermore vary in time and periodicity.

Accordingly, the inventors have become aware of a need in the industry to overcome the abovementioned and other shortcomings.

Accordingly, it is an object of the present invention to provide a new sensor assembly for a cooking chamber of a microwave oven and a new method for controlling energy consumption of a sensor assembly for a cooking chamber of a microwave oven.

Furthermore, it is an object of the present invention to provide a sensor assembly and a method of controlling energy consumption having an improved adaption of energy consumption in relation to the available energy.

Furthermore, it is an object of the present invention to provide a sensor assembly that may function for a certain period (such as several seconds or minutes) after the oven, which is providing power to the assembly, is turned off (i.e. the microwave field is no longer obtained).

According to a first aspect of the present invention, there is provided an assembly, such as a sensor assembly, for a cooking chamber of a microwave oven.

The assembly comprises at least one energy consuming part; an energy harvesting part configured to harvest energy from microwave radiation within the cooking chamber; and an energy supply part configured to supply energy from the energy harvesting part to the at least one energy consuming part. An energy consuming part of the sensor assembly is a part of the assembly, which part requires a supply of energy during operation of that part.

The at least one energy consuming part may comprise at least one sensor comprising a first sensor configured to measure a first property of a first item in the cooking chamber.

Throughout the present disclosure the term "the sensor" as well as "a sensor" may be understood as "one or more sensors of the at least one sensor, such as the first sensor and/or a second sensor, etc.".

The energy harvesting part may comprise a microwave antenna, the microwave antenna may have a predetermined tuning frequency for generating an RF antenna signal in response to microwave radiation at a predetermined excitation frequency.

Throughout the present disclosure the term "the microwave antenna" as well as "a microwave antenna" may be understood as "one or more microwave antennas of the sensor assembly".

The energy supply part may comprise a dc power supply circuit coupled to the RF antenna signal. The dc power supply circuit may be configured to produce a power supply voltage e.g. by rectifying and extracting energy from the RF antenna signal. The dc power supply circuit may comprise active and/or passive components.

According to the first aspect of the present invention the sensor assembly is configured to obtain first information indicative of availability of microwave radiation at the energy harvesting part. Accordingly, any part of the sensor assembly may be configured to obtain the first information. The first information may be obtained by one part of the assembly, e.g. via another part of the assembly. The first information may be obtained via/by a plurality of parts of the assembly such as both via/by the at least one energy consuming part and via/by the at least one energy harvesting part.

Information, which is indicative of availability of microwave radiation at the energy harvesting part, may for instance include a level of microwave radiation being (such as: presently being, and/or being in the future, such as for one or more points of time in the future) available at the energy harvesting part or a mere indication that microwave radiation: "may be available", or "is available", or "is not available".

According to the first aspect of the present invention the sensor assembly is configured to control at least one energy consuming operation of at least one of the at least one energy consuming part in response to the first information. Controlling an operation may comprise: adjusting and/or initiating and/or shutting down that operation. Controlling an operation in response to information may be as a function of that information. Controlling an operation in response to information may be based on one or more threshold values of that information. An operation may be controlled (e.g. adjusted) linearly as a function of the first information. An operation may be controlled based on a threshold value criterion for that information. For instance, controlling may be performed only if the first information indicates a value being above or below that threshold criterion.

According to a second aspect of the present invention, there is provided a method for controlling energy consumption of a sensor assembly for a cooking chamber of a microwave oven.

The assembly according to the second aspect may be identical to the assembly according to the first aspect. The assembly according to the second aspect comprises at least one energy consuming part; an energy harvesting part configured to harvest energy from microwave radiation within the cooking chamber; and an energy supply part configured to supply energy from the energy harvesting part to the at least one energy consuming part.

The at least one energy consuming part according to the second aspect may comprise at least one sensor comprising a first sensor configured to measure a first property of a first item in the cooking chamber.

The energy harvesting part according to the second aspect may comprise a microwave antenna, the microwave antenna may have a predetermined tuning frequency for generating an RF antenna signal in response to microwave radiation at a predetermined excitation frequency.

The energy supply part according to the second aspect may comprise a dc power supply circuit coupled to the RF antenna signal. The dc power supply circuit may be configured to produce a power supply voltage e.g. by rectifying and extracting energy from the RF antenna signal.

The method according to the second aspect comprises obtaining first information indicative of availability of microwave radiation at the energy harvesting part.

The method according to the second aspect comprises controlling at least one energy consuming operation of at least one of the at least one energy consuming part in response to the first information.

Obtaining first information indicative of availability of microwave radiation at the energy harvesting part as well as provision of a sensor assembly configured for this, according to the second and the first aspect of the present invention, respectfully, may be advantageous since this enables a method and a sensor assembly, respectfully, being configured to initiate desired responses / reactions in response to this information.

Controlling at least one energy consuming operation of at least one of the at least one energy consuming part in response to the first information as well as provision of a sensor assembly configured for this, according to the second and the first aspect of the present invention, respectfully, may be advantageous since it may be desired to adapt the functionality of the sensor assembly (which functionality may be energy dependent in such a way that an increasing functionality may require an increasing energy consumption) to the available power (i.e. the power of the microwave field feeding the harvesting part). For instance, when power is abundant, the provided functionality may be at a high level, whereas when power is (or is assumed to be or is expected to be) scarce or non-existent, the functionality may be adjusted accordingly and according to needs, such as by focusing on the highest priority functionalities, which even may be operated at a lower but still acceptable rate.

It is an advantage of the present invention according to the first and second aspect that energy consumption of the sensor assembly may be controlled in response to information indicative of the available energy. For instance, if ample energy is available for harvest, then the sensor assembly may operate at full capacity, thereby using a high amount of energy, whereas if "low" or "no" energy is available for harvest, then the sensor assembly may operate at a relative lower capacity, thereby using a relative lower amount of energy.

Various illustrative examples of the present invention according to the appended claims is described more fully hereinafter with reference to the accompanying drawings, in which various embodiments of the present invention are illustrated. The present invention according to the appended claims may, however, be embodied in one or more different forms and should not be construed as limited to the embodiments set forth herein. In addition, an illustrated embodiment needs not have all the aspects or advantages shown. An aspect or an advantage described in conjunction with a particular embodiment of the present invention is not necessarily limited to that embodiment and may be practiced in any other embodiment of the present invention even if not so illustrated, or if not so explicitly described. It should also be noted that the accompanying drawings may be schematic and simplified for clarity, and they may merely show details which are essential to the understanding of the present invention, while other details may have been left out.

Other systems, methods and features of the present invention will be or will become apparent to one having ordinary skill in the art upon examining the following drawings and detailed description. It is intended that all such additional systems, methods, and features, shall fall under the present description, shall be within the scope of the present invention, and shall be encompassed by the accompanying claims.

The accompanying drawings are included to provide a further understanding of the invention, and are incorporated in and constitute a part of the present disclosure. The drawings illustrate embodiments of the invention and, together with the description, serve to explain the principals of the invention. Other and further aspects and features will be evident from reading the following detailed description of the embodiments. The drawings are intended to illustrate the design and utility of embodiments, in which similar elements may be referred to by common reference numerals. These drawings are not necessarily drawn to scale. In order to better appreciate how the above-recited and other advantages and objects are obtained, a more particular description of the embodiments will be rendered, which are illustrated in the accompanying drawings. These drawings may only depict typical embodiments and may therefore not be considered limiting of its scope.

### BRIEF DESCRIPTION OF THE DRAWINGS

FIG. 1A) schematically illustrates a simplified schematic block diagram of a sensor assembly in accordance with a first embodiment of the invention.
FIG. 1B) schematically illustrates a simplified schematic block diagram of a sensor assembly in accordance with a second embodiment of the invention.
FIG. 2 schematically illustrates a simplified schematic block diagram of a sensor assembly in accordance with a third embodiment of the invention.
FIG. 3 schematically illustrates a simplified schematic block diagram of a sensor assembly in accordance with a fourth embodiment of the invention.
FIG. 4A) schematically illustrates a simplified electrical circuit diagram of a first exemplary RF power limiter and DC power supply circuit of a sensor assembly in accordance with any of the various embodiments of the invention.
FIG. 4B) schematically illustrates a simplified electrical circuit diagram of a second exemplary RF power limiter and DC power supply circuit of a sensor assembly in accordance with any of the various embodiments of the invention.
FIG. 5 schematically illustrates an exemplary first item container in the form of an intravenous infusion fluid bag.
FIG. 6 schematically illustrates a cross section of an intravenous infusion fluid bag comprising a sensor assembly in accordance with various embodiments of the invention.
FIG. 7 schematically illustrates a cross section of an intravenous infusion fluid bag comprising a sensor assembly in accordance with various alternative embodiments of the invention.
FIG. 8 schematically illustrates an exemplary first item container in the form of a bottle with baby formula comprising an integrated sensor assembly in accordance with any of the embodiments of the assembly.
FIG. 9 schematically illustrates an exemplary food container with a sensor assembly integrated in wall section of the food container.
FIG. 10 schematically illustrates a temperature probe which comprises a sensor assembly in accordance with any of the embodiments thereof.
FIG. 11 schematically illustrates an embodiment of a sensor assembly according to the present invention.
FIG. 12 illustrates an example of the microwave field strength as a function of time as applied to a first area of an item (not illustrated in Fig. 12) to be heated in a microwave oven, which item is placed on a rotating turntable during heating.
FIG. 13 A) is similar to Fig. 12 and Fig. 13 B) schematically illustrates an enlarged part of Fig. 13 A). Combined, Figs. 13 A) and B) schematically illustrates on/off periods which may be caused by an AC-supply in combination with a half wave rectifier.
FIG. 14 illustrates the situation as described in connection with Fig. 12, but with an exemplary power level of 50 %, which for the illustrated example is achieved by alternately activating and de-activating the magnetron every 625 ms.
FIG. 15 illustrates a situation similar to what is illustrated in Fig. 12. However, in Fig. 15, the microwave oven is turned off at time = 5 s.
FIG. 16 illustrates a situation similar to Fig. 12 with the addition of the dashed line, which illustrates an example of needed available power for the energy harvesting part in order for the sensor assembly to generate the desired power.
FIG. 17 schematically illustrates a method according to the present invention.

### DETAILED DESCRIPTION

As used throughout the present disclosure, the singular forms "a," "an," and "the" may refer to one or more than one, unless the context clearly dictates otherwise.

The first information may comprise information provided via the energy harvesting part. Information may for instance be provided by means of a coded (e.g. such as modulated) microwave signal generated by the microwave oven. Such coded signal, as received via the energy harvesting part, may be decoded by the assembly, such as by a processing unit of the assembly. Use of a coded microwave signal may enable provision of information of future events to the assembly. Future events may comprise information of expected and/or planned and/or scheduled availability of microwave energy, which may be for a period ahead in time. Alternatively or additionally, information provided via the energy harvesting part may be based on assessment/measurement of a level of the RF antenna signal and/or a level of the power supply voltage. Accordingly, a low level (of the RF antenna signal and/or the power supply voltage) may be interpreted as a low availability of microwave energy. Similarly, a high level (of the RF antenna signal and/or the power supply voltage) may be interpreted as a high availability of microwave energy.

The first information may comprise information provided by and/or via at least one of the at least one sensor. Information may for instance be provided (e.g. generated) based on a measurement of a property (e.g. the first property) of the first item in the cooking chamber. For instance, if the first property has reached a preset threshold level or value, it may indicate that the oven is assumed to be turned off within a relative short time period, such as a known time period or an assumed time period. Accordingly, information of an assumed or scheduled future availability of microwave radiation at the energy harvesting part may be provided by and/or via the at least one sensor.

The at least one energy consuming part may comprise at least one communication unit comprising a first communication unit configured to send and/or receive signals. The at least one communication unit may comprise a plurality of communications units. The plurality of communication units may be dedicated for sending and/or receiving different types of signals and/or using different types of mechanisms for sending/receiving.

The at least one communication unit may comprise a wireless (such as optical) data transmitter configured for wireless data transmission of a wireless data signal.

A communication unit (such as the first communication unit or another communication unit) may be configured to send/receive signals using electromagnetic waves, such as optical techniques, e.g. by means of one or more diodes and/or photodetectors, or RF transmitters/receives.

The first communication unit may be configured for wireless communication, such as wireless RF communication and/or wireless optical communication.

The first communication unit may be configured to receive signals, and the first information may comprise information provided via the first communication unit.

The at least one communication unit may comprise a displaying part configured to send (i.e. displaying) signals to a user of the assembly. Accordingly, sending a signal may include displaying information to a user of the assembly.

The displaying part may be considered as a part being separate and distinguishable from the at least one communication unit. Alternatively, the displaying part may be considered to be a communication unit, such as the first communication unit or another communication unit. The displaying part may be configured to display information within the oven chamber. The displaying part may be configured to display different colors and/or light intensity. The displaying part may be configured to display text and/or numbers. The displaying part may comprise one or more diodes and/or one or more displays. The information being displayed may be based on measurements from the at least one sensor. If the at least one sensor is configured to measure temperature the information may for instance be a temperature value, and or any indication of a scale of temperature, e.g. relative to a desired/target temperature. The displaying part may be configured to display an estimated time until a pre-set value of a property (e.g. temperature) is reached.

The at least one energy consuming part may comprise any one or more or all of the following: at least one sensor, at least one communication unit, and at least one processing unit. Furthermore, the at least one energy consuming part may comprise the displaying part.

The first information may comprise information of a detected availability of microwave radiation at the energy harvesting part.

The first information may comprise information of an assumed or expected present and/or future level or availability of microwave radiation available at the energy harvesting part.

Information of an assumed or expected availability of microwave radiation at the energy harvesting part may e.g. be based on info indicating that a desired or a threshold temperature, e.g. as measured by the at least one sensor, has been reached. Accordingly, in such a situation it may be assumed or expected that the oven will be turned off, e.g. either manually or automatically, shortly thereafter, such as within a few seconds, such as within 10 or 5 seconds. Accordingly, the availability of microwave radiation at the energy harvesting part will be zero after that time.

It may be desired to lowering power consumption of the assembly before the oven is turned off. Accordingly, it may be advantageous to be in possession of information of an assumed or expected availability of microwave radiation at the energy harvesting part.

The first information may comprise information of at least one or more parts of a scheduled level or scheduled availability of microwave radiation at the energy harvesting part.

The first information may comprise information of a decrease of microwave radiation available at the energy harvesting part from one period of time to another period of time.

The first information may comprise information of an increase of microwave radiation available at the energy harvesting part from one period of time to another period of time.

Controlling at least one energy consuming operation may comprise decreasing energy consumption of the at least one of the at least one energy consuming part.

Controlling at least one energy consuming operation may comprise increasing energy consumption of the at least one of the plurality of energy consuming parts.

The first property may be a physical property. Additionally, or alternatively, the first property may be a chemical property.

The first item may be a food item. Additionally, or alternatively, the first item may be a medical item.

The at least one energy consuming part may comprise at least one processing unit including a first processing unit configured to process measurements from the at least one sensor.

Throughout the present disclosure terms such as "the processing unit" or "a processing unit" may be understood as "one or more processing units of the at least one processing unit, such as the first processing unit and/or a second processing unit, such as a digital processor and/or a controller". The processing unit may be integrated with and/or form part of the sensor. The processing unit may comprise a digital processor.

Controlling the at least one energy consuming operation may comprise controlling a measurement frequency of the first sensor. Controlling a measurement frequency may be implemented in the at least one sensor. Alternatively, or additionally, controlling a measurement frequency may be carried out by means of a processing unit. For instance, the processing unit may process a reading from the at least one sensor at a controllable time scale, such as at a controllable frequency.

Controlling the at least one energy consuming operation may comprise controlling a clock frequency of the processing unit. For instance, the clock frequency may be lowered, resulting in lower power consumption by the processing unit, if the first information indicates that less power is or will be available at the energy harvesting part.

The method according to the second aspect of the present invention may be configured to control energy consumption of a sensor assembly, which assembly is provided as described in the present disclosure in connection with the first aspect including as described in terms of any of the appended claims directed towards the assembly.

It may be of importance to monitor one or more properties (such as physical and/or chemical properties) of a first item.

The first item may comprise intravenous infusion fluids or a food item.

A heating process, e.g. of intravenous infusion fluids, may for example be in connection with a subsequent administration of the heated preparation to a patient or a user.

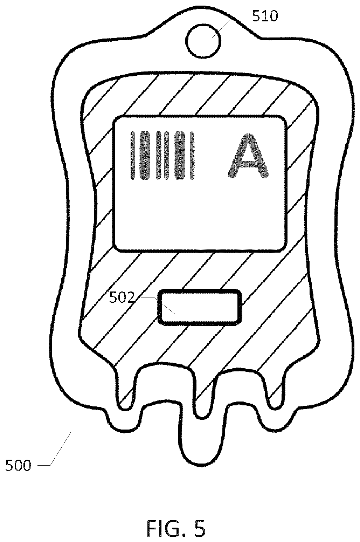

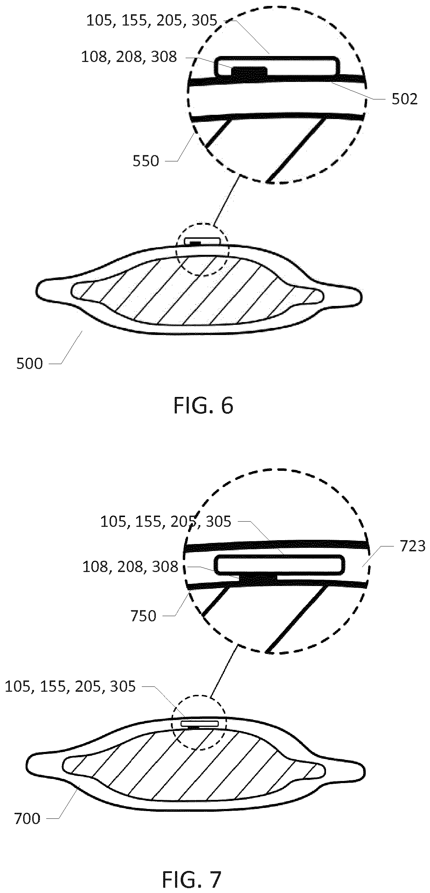

In connection with heating in the cooking chamber, the first item may be held in a suitable type of container, such as a medical preparation container / medical container, such as a plastic bag. The container may for example comprise at least one of: a medical fluid bag (such as an infusion fluid bag as illustrated in FIG. 5), an agar container, a syringe. The container may be suitable for use in various types of industrial or consumer microwave ovens. The sensor assembly may be partially or fully embedded in a material of the container such as a wall section, lid section, or bottom section as discussed below in additional detail with reference e.g. to FIGS. 6 and 7 and 9. The container may be positioned or inserted into the oven chamber by a medical professional and the microwave oven activated thereafter.

It may be important to accurately control the temperature of various types of intravenous infusion fluids during heating to avoid inactivating pharmaceutical compositions or active agents of the first item by overheating and to avoid harming the intended recipient/patient in connection with subsequent administration of the first item.

Measuring may include detecting and/or sensing.

By measuring a first property of a first item in the cooking chamber, one or more parameter values of the first property may be obtained.

The first property may comprise one or more properties of the first item.

The first item may comprise one or more items in the cooking chamber.

The sensor may be in physical contact with the first item for measuring the first property.

The first property may comprise at least one of the following: temperature, viscosity, pressure, colour, humidity, reflectivity, and electric conductivity.

The sensor may be arranged to measure the first property, for example temperature, at a core of the first item. Alternatively, or additionally, the sensor may be arranged to measure the first property at a surface of the first item, for example by contact to an outer surface of the first item or by remote sensing.

The sensor may operate without physical contact to the first item. The sensor may remotely measure the first property of the first item e.g. using an infrared (IR) detector, such as an IR temperature detector.

The sensor may comprise a sensory portion configured for sensing the first property.

The sensory portion of the sensor may alternatively or additionally measure or detect a first property of the first item for example water content or the presence and/or concentration of certain active agents in the first item.

The at least one sensor may comprise multiple individual sensors of different types and/or multiple individual sensors of the same type.

Multiple individual sensors of different types may be configured to measure different properties of the first item, e.g. parallel in time.

Multiple sensors of the same type may be configured to measure the first property, for example temperature, at different locations of the first item, for example at the core and at the surface, e.g. simultaneously.

The sensor may be arranged to obtain physical contact or sensory contact with the first item using one or more various techniques such as direct physical contact or indirect contact through a layer of the container as discussed in additional detail below with reference to the appended drawings.

The sensor assembly may be partially or fully embedded in a wall section, lid section, or bottom section of a container. This may fasten the sensor assembly to the container in a permanent manner. In the alternative, the sensor assembly may be detachably fastened to the container / first item, for example to a wall section, a lid section or bottom section of the container, for example by a glue agent or elastic band etc.

The container may be inserted in the oven chamber of various types of commercially available microwave ovens and the first item may be heated in a rapid and efficient manner.

The sensor may comprise a temperature sensor, such as a thermistor. A temperature sensor may be configured such that the temperature of the first item can be monitored and controlled either automatically or manually by a medical professional such as a doctor or nurse.

Parameter values of the measured first property may be transmitted wirelessly to the outside of the microwave oven chamber during heating of the first item, e.g. by means of the communication unit.

Parameter values of the measured first property may be displayed on a suitable parameter indicator such as a display connected to, or integrated, with the container. The parameter indicator may comprise at least one indicator selected from a group of {a LED, multiple LEDs of different color, a loudspeaker, an alphanumeric display, E-ink paper}. The functionality and technical details of the parameter indicator is discussed in further detail below with reference to the appended drawings. However, the use of E-ink paper as parameter indicator is particularly attractive in some applications because E-ink paper allows the measured parameter value or values to be inspected by the user after the microwave oven is turned off and the energy source interrupted due to the bi-stable operation of E-ink paper.

The ability of the sensor assembly to be energized by the harvested microwave energy entails numerous advantages such as elimination of batteries. Due to the extremely EMI hostile environment inside the oven compartment it may be unsafe to place batteries or similar chemical energy storage device for powering the assembly inside the oven chamber. Furthermore, the need for battery replacement in the sensor assembly would make it difficult to make a housing of a battery powered sensor assembly hermetically sealed against the external environment.

The strength of the microwave electromagnetic radiation or microwave field inside the microwave oven is often excessive and may irreversibly damage various active or passive components of the dc (DC) power supply circuit, or other electronic circuitry, of the sensor assembly. The component damage may be caused by RF (radio frequency) signal voltages, delivered by the microwave antenna of the sensor assembly in response to the RF electromagnetic radiation, which exceeds a maximum voltage rating and/or maximum power rating of the active or passive components of the dc power supply circuit. Such damaging RF signal voltages may lead to the destruction of the active or passive components of the DC power supply circuit. This is particularly the case where the DC power supply circuit, and possibly additional electronic circuitry, is integrated on a sub-micron CMOS semiconductor substrate which imposes severe restrictions on the voltage level and/or power level that can be tolerated without overheating or break-down of the active or passive components formed in the semiconductor substrate.

Hence, it may be advantageous to be able to limit the amount of power harvested by the RF antenna and supplied to the DC power supply circuit of the sensor assembly for example when exposed to excessive levels of microwave energy inside the microwave oven. This may be accomplished in accordance with one embodiment of the present invention wherein the sensor assembly comprises an RF power limiter connected in-between the RF antenna signal and the dc power supply circuit for limiting an amplitude or power of the RF antenna signal in accordance with predetermined signal limiting characteristics.

It may be impossible, or at least highly impractical, to absorb or dissipate large amounts of RF power in components of a small CMOS semiconductor substrate in certain applications of the sensor assembly. Hence, it may be advantageous to prevent too much energy entering the semiconductor substrate. This may be accomplished in accordance with an embodiment of the RF power limiter which comprises: a variable impedance circuit connected across the RF antenna signal, for example across a pair of RF antenna terminals; wherein said variable impedance circuit exhibits a decreasing input impedance with increasing amplitude or power of the RF antenna signal at the predetermined excitation frequency to decrease a matching between the input impedance of the power limiter and an impedance of the microwave antenna.

The variable impedance circuit may be configured to exhibit a substantially constant input impedance at power or amplitude levels of the RF antenna signal below a threshold level; and exhibit a gradually, or abruptly, decreasing input impedance at power or amplitude levels of the RF antenna signal above the threshold level. The input impedance of the variable impedance circuit may for example gradually decrease with increasing input power of the RF antenna signal above the threshold level.

The variable impedance circuit may comprise a PIN limiter diode or a controlled FET transistor as discussed in further detail below with reference to the appended drawings. The DC power supply circuit may comprise one or more RF Schottky diode(s) for rectification of the limited RF antenna signal for the reasons discussed in further detail below with reference to the appended drawings.

The microwave antenna may comprise various antenna designs for example at least one of: {a monopole antenna, a dipole antenna, a patch antenna}. The microwave antenna may be integrally formed in a wire or conductor pattern of a carrier or substrate, such as a printed circuit board, supporting the sensor assembly. A monopole microwave antenna is generally compact and omnidirectional.

The sensor assembly may be configured for industrial types of microwave ovens using the standardized 915 MHz frequency of emitted microwave radiation. Alternatively or additionally, the sensor assembly may be configured for consumer types of microwave ovens using the standardized 2.45 GHz frequency of emitted microwave radiation. The sensor assembly may be configured for multiple frequencies, e.g. using multiple microwave antennas. The energy harvesting part may comprise a plurality of microwave antennas. The plurality of microwave antennas may be configured for different predetermined tuning frequencies. The tuning frequency and possibly physical dimensions of the microwave antenna may for example differ between different types of microwave powered sensor assemblies / different types of microwave antennas. In either case, the individual microwave antenna is responsive to the excitation created by the microwave radiation in the oven chamber of the industrial or consumer variant of microwave oven during heating of the first item in the oven chamber. The microwave antenna generates the RF antenna signal and the DC power supply circuit rectifies and extracts energy from the received RF antenna signal (the extraction may e.g. be from the limited RF antenna signal or directly from the RF antenna signal). The power supply voltage generated by the DC power supply circuit may be connected to active electronic circuits and components of the sensor assembly and supply electrical power thereto. The active electronic circuits and components may in addition to the sensor comprise one or more of the following: a processing unit, a display, and a communication unit. Hence, the sensor assembly may be able to operate without any battery source by instead relying on energy harvested from the microwave radiation in the oven chamber.

The microwave antenna may be detuned with a predetermined frequency amount from the expected excitation frequency, e.g. either 2.45 GHz or 915 MHz, of the microwave radiation used to energize the particular embodiment of the sensor assembly. The predetermined tuning frequency of the microwave antenna may for example deviate from the predetermined excitation frequency (915 MHz or 2.45 GHz) of the microwave radiation by more than +50 % or more than -33 % such as at least +100 % or at least -50 %. The detuning decreases the amount of microwave energy picked-up by the microwave antenna and therefore decreases the level of the RF antenna signal applied to either the RF power limiter (if present) and to the dc power supply circuit and may assist in protecting the latter circuits against excessive voltage and power levels of the RF antennal signal when the microwave antenna is situated in a hot spot in the oven chamber.

A higher tuning frequency of the microwave antenna than the standardized 2.45 GHz (or 915 MHz) microwave radiation frequency leads to the additional benefit of smaller physical dimensions of the microwave antenna. The smaller physical dimensions leads to various benefits as discussed in further detail below with reference to the appended drawings.

In one embodiment of the invention a generator impedance of the microwave antenna is at least two times larger than an input impedance at the RF power limiter at the predetermined excitation frequency of the microwave radiation.

The sensor assembly may be enclosed by a housing. Hence, one embodiment of the sensor assembly comprises:
an electrically conductive housing, such as a metal sheet or metal net, enclosing and shielding at least the power supply circuit against the microwave electromagnetic radiation. The microwave antenna may be arranged outside the housing if the latter comprises an electrically conducting material to allow the microwave radiation to reach the microwave antenna substantially without significant attenuation and thereby harvest microwave energy. The electrically conductive housing may comprise a metal sheet or metal net, enclosing and shielding at least the RF power limiter and the power supply circuit against the microwave electromagnetic radiation.

The housing may be hermetically sealed to protect these circuits and sensor enclosed therein against harmful liquids, gasses or other contaminants of the first item present within the oven chamber. A sensory portion of the sensor may protrude from the housing to allow the sensory portion to obtain physical contact with the first item.

The sensor assembly may comprise a processing unit coupled to the power supply voltage for receipt of operating power and a communication unit for transmission (e.g. of a wireless data signal), to the exterior of the oven chamber, of parameter values of the measured first property of the first item. The communication unit may be configured to transmit repeatedly at regular time intervals or at irregular time intervals during heating of the first item depending on the needs of a particular application. The communication unit may comprise an optical data transmitter. The communication unit may be coupled to the processing unit, or possibly directly to the sensor, for receipt and e.g. transmission of the measured parameter values of the first property or properties of the first item to the exterior of the oven chamber.

The communication unit may be configured to emit a wireless data signal comprising the measured parameter values encoded in digital format. The wireless data signal may be transmitted to a suitable wireless receiver arranged at the outside of the oven chamber as discussed in further detail below with reference to the appended drawings. The skilled person will understand that there are certain advantages of using optical data transmitters and optical data signals as these are entirely immune to the previously discussed excessive levels of microwave radiation inside the oven chamber. Furthermore, microwave ovens tend to act essentially as a Faraday cage to block any emission of microwave signals, including RF data signals, to avoid leakage of the potentially harmful microwave radiation to the outside and reach the users.

The sensor assembly may comprise a data memory, such as a non-volatile memory like a flash memory or EEPROM, for storage of a target temperature profile for heating of the first item. The processing unit may be configured to read the target temperature profile from the data memory and transmit the target temperature profile via the communication unit to the exterior of the oven chamber. Various features and advantages of this embodiment of the sensor assembly are discussed in further detail below with reference to the appended drawings.

The method according to the present invention may comprise:
positioning a container, holding the first item, inside an oven chamber of a microwave oven;
activating the microwave oven to produce electromagnetic radiation within the oven chamber thereby irradiating and heating the first item;
extracting energy from the RF antenna signal in response to irradiation of the sensor assembly by the electromagnetic radiation; and
repeatedly measuring the first property of the first item by the sensor.

The method according to the present invention may comprise one or both of:
- displaying a parameter value of the measured physical or first property of the first item; and
- transmitting a parameter value of the physical or first property of the first item to a wireless receiver arranged outside the oven chamber via a wireless data communication link.

The wireless data communication link may be utilized by the above discussed communication unit to establishing a wireless, e.g. optical, data transmission channel to the previously discussed optical receiver arranged at the outside of the oven chamber. The optical data transmitter may be emitting the optical data signal as light waves in the visible spectrum or in the infrared spectrum.

The method according to the present invention may comprise limiting an amplitude or a power of the RF antenna signal in accordance with predetermined signal limiting characteristics of an RF power limiter for the reasons discussed above. The signal limiting characteristics may be carried out by peak-clipping of the signal waveform of the RF antenna signal or by an Automatic Gain Control (AGC) function without distorting the signal waveform of the RF antenna signal.

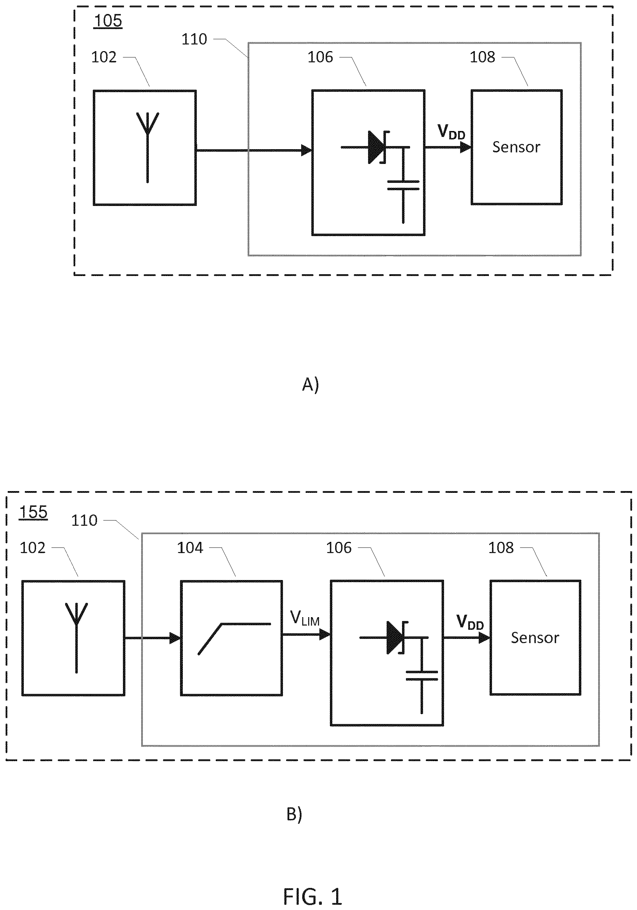

FIG. 1A) schematically illustrates a simplified schematic block diagram of a sensor assembly 105 in accordance with a first embodiment of the invention. The sensor assembly 105 comprises at least one energy consuming part comprising at least one sensor comprising a sensor 108. The sensor assembly 105 comprises an energy harvesting part configured to harvest energy from microwave radiation within the cooking chamber, the energy harvesting part comprising a microwave antenna 102. The sensor assembly 105 comprises an energy supply part configured to supply energy from the energy harvesting part to the at least one energy consuming part, the energy supply part comprising a dc power supply circuit 106.

The microwave antenna 102 has a tuning frequency in the microwave region or frequency range - for example a tuning frequency between 800 MHz and 3.0 GHz. The microwave antenna 102 is responsive to excitation by the microwave radiation or electromagnetic field generated in an oven chamber during heating of the first item. The oven chamber may be of the industrial or consumer type of microwave oven. The skilled person will understand that the microwave antenna 102 may be dimensioned or designed with a tuning frequency of about 2.45 GHz if the sensor assembly 105 is intended for use in consumer type of microwave ovens. The microwave antenna 102 may be dimensioned or designed with a tuning frequency of about 915 MHz if the sensor assembly 105 is intended for use in industrial type of microwave ovens. Both may be applied, e.g. using two different microwave antennas. The tuning frequency of the microwave antenna 102 may alternatively be detuned with a predetermined amount from the expected excitation frequency, either 2.45 GHz or 915 MHz, of the microwave radiation as discussed above.

A sensory portion of a sensor 108 of the sensor assembly 105 may be in physical contact with a first item to measure or detect a first property of the first item during heating. The first property may be such as a temperature, viscosity, pressure, colour, humidity, electric conductivity etc. In the alternative, the sensor 108 may operate without physical contact to a first item and instead measure the first property of the first item by remote or non-contact sensing, e.g. using an infrared (IR) temperature detector etc. The sensory portion of the sensor 108 may alternatively measure or detect a first property of the first item under heating, for example its water content, its pH level or the presence and/or concentration of certain chemical agents such as salt, sugar, acids, fats etc. in the first item.

The skilled person will understand that the sensor 108 may be configured to measure or detect several different physical properties of the first item and/or one or more chemical properties. The sensor assembly 105 may comprise multiple individual sensors of different types to measure the different physical properties and/or chemical properties of the first item.

The microwave antenna 102 is responsive to the excitation by the microwave radiation as mentioned above to generate an RF (radio frequency) antenna signal which is connected to an input of a dc (DC) power supply circuit 106 of the sensor assembly 105 either directly or through an optional RF power limiter 104 as discussed below. The DC power supply circuit 106 is configured to rectify the received RF antenna signal and extract a DC power supply voltage (V_{DD}) therefrom. The DC power supply circuit 106 may comprise one or more filter or smoothing capacitor(s) coupled to the output of a rectifying element. Several types of rectifying elements may be used such as semiconductor diodes or actively controlled semiconductor switches/transistors. In one embodiment, the rectifying element comprises a Schottky diode as schematically indicated on circuit block 106. The one or more filter or smoothing capacitor(s) serves to suppress voltage ripple and noise on the DC supply voltage V_{DD} and may further serve as an energy reservoir. The energy reservoir stores extracted energy for a certain time period and ensures that the DC power supply voltage remains charged or powered during short drop outs of the RF antenna signal as discussed below in additional detail. The sensor 108 is powered or energized by the DC supply voltage (V_{DD}) for example via a power supply terminal or input of the sensor 108 connected to V_{DD}. The sensor 108 may comprise various types of active digital and/or analog electronic circuitry and/or display components that need power to function properly.

The sensor assembly 105 may comprise a housing (or casing) 110 surrounding and enclosing at least the DC power supply circuit 106 and possibly at least part of the sensor 108. The housing 110 may be hermetically sealed to protect these circuits and the sensor(s) enclosed therein against harmful liquids, gasses or other contaminants inside the oven chamber. The previously discussed sensory portion of the sensor 108 may protrude to the outside of the housing 110 and through a wall (not shown) of the assembly 105. This will allow the sensory portion to obtain physical contact with the first item. The housing 110 may comprise an electrically conductive layer or shield, such as a metal sheet or metal net enclosing at least the power supply circuit 106 and the sensor 108, against the strong RF microwave electromagnetic field generated by the microwave oven during operation. The microwave or RF antenna 102 may be placed outside the electrically shielded housing 110 to allow unhindered harvesting of the microwave energy from the microwave radiation or field.

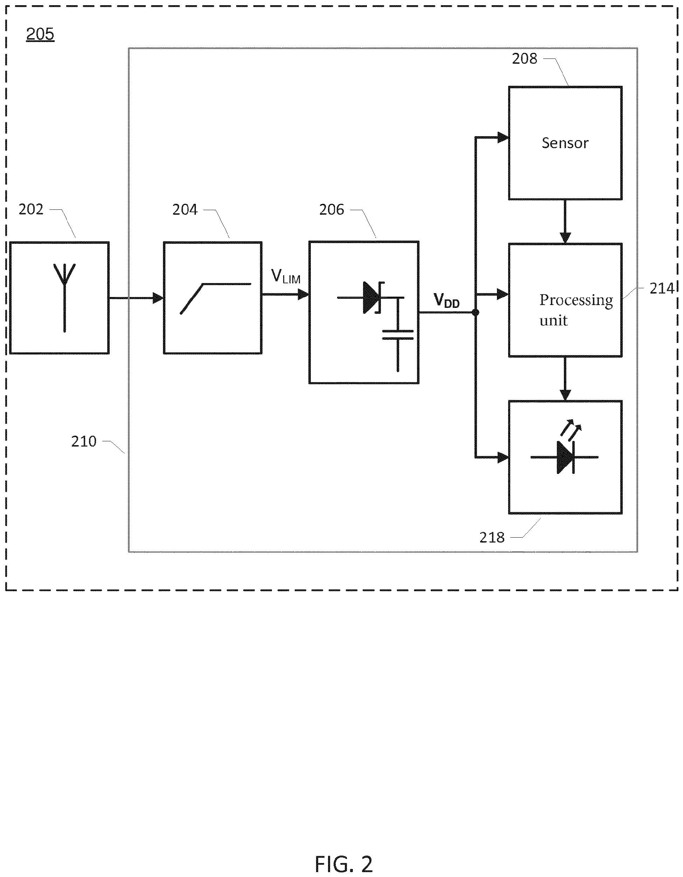

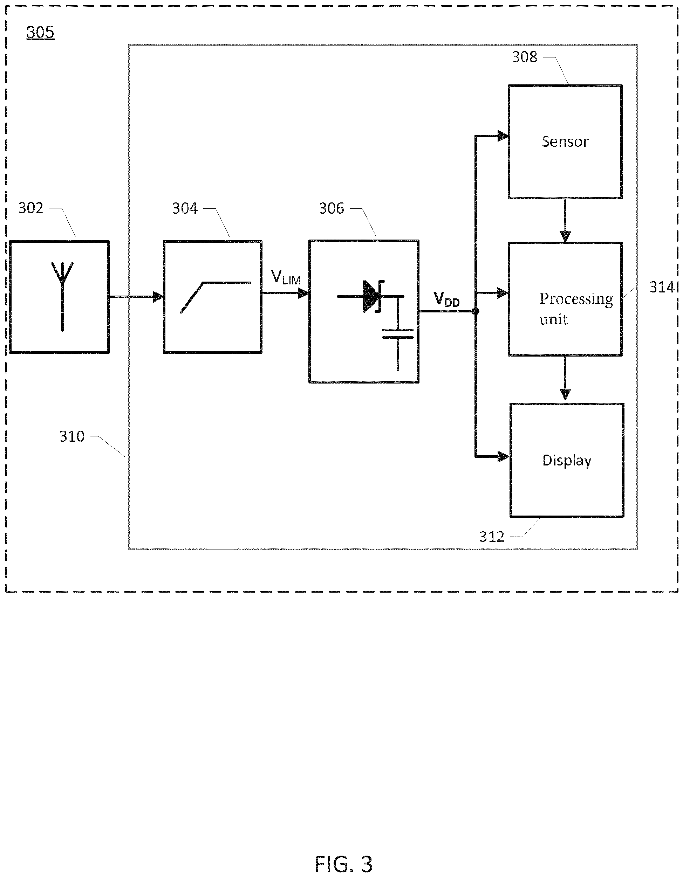

The measured first property of the first item may be indicated to a user of the microwave oven in numerous ways. In certain embodiments of the sensor assembly 105, the latter comprises a display configured to displaying parameter values or respective parameter values of the measured physical and/or chemical properties of the first item to the outside of the microwave oven as discussed in further detail below with reference to FIG. 3. In alternative embodiments of the sensor assembly 105, the latter comprises a communication unit configured for transmitting the parameter values or respective parameter values of the measured physical and/or chemical properties of the first item to the outside of the microwave oven chamber as discussed in further detail below with reference to FIG. 2.

FIG. 1B) schematically illustrates a simplified schematic block diagram of a sensor assembly 155 in accordance with a second embodiment of the invention. The sensor assembly 155 comprises at least one energy consuming part comprising at least one sensor comprising a sensor 108. The sensor assembly 155 comprises an energy harvesting part configured to harvest energy from microwave radiation within the cooking chamber, the energy harvesting part comprising a microwave antenna 102. The sensor assembly 155 comprises an energy supply part configured to supply energy from the energy harvesting part to the at least one energy consuming part, the energy supply part comprising a dc power supply circuit 106.

The sensor assembly 155 comprises an RF power limiter 104 in addition to the previously described circuits and elements 102, 106, 108 and 110. The RF power limiter 104 is connected in-between the RF antenna signal at the RF antenna output and an input of the DC power supply circuit 106.

Hence, the RF antenna signal is electrically coupled or connected to an input of the RF power limiter 104 instead of directly to the DC power supply circuit 106 as in the first embodiment of the sensor assembly. The RF power limiter 104 is configured to limiting a level such as amplitude level, power level or energy level of the RF antenna signal in accordance with signal limiting characteristics of the RF power limiter 104. The RF power limiter 104 produces a limited RF antenna signal V_{LIM} at a limiter output in response to the RF antenna signal. The signal limiting characteristics may for example comprise a linear behaviour at relatively small levels of the RF antenna signal, for example below a certain threshold level, and a non-linear behaviour above the threshold level. In this manner, the level of the RF antenna signal and the level of the limited RF antenna signal may be largely identical for RF antenna signals below the threshold level while the level of the limited RF antenna signal may be smaller than the level of the RF antenna signal above the threshold level. Various circuit details and mechanisms to produce different types of signal limiting characteristics of the optional RF power limiter 104 are discussed below in additional detail.

The inclusion of the RF power limiter 104 has several advantages for example by protecting the down-stream DC power supply circuit 106, electrically coupled to the limited RF antenna signal, against overvoltage conditions created by excessively large power levels or amplitude levels of the RF antenna signal in response to the RF electromagnetic radiation in the oven chamber. These excessive signal input conditions are quite contrary to the operation of normal wireless RF data communication equipment where the challenge often is to obtain sufficient RF power to safely transmit or decode data signals modulated onto the carrier wave. In contrast, the sensor assembly 155 will often be placed very close to the source of the RF electromagnetic radiation in the oven chamber leading to excessively large voltages and input power of the RF antenna signal. Furthermore, the strength of the microwave radiation in the oven chamber is often highly variable through the chamber due to standing waves. These standing waves lead to the formation of so-called "hot spots" and "cold spots" inside the oven chamber during operation with highly different field strengths of the microwave radiation. The sensor assembly 155 should be configured to at one hand extract sufficient power from the microwave antenna to ensure proper operation when positioned in a cold spot and on the other hand be able to withstand very large amplitude RF antenna signals when the microwave antenna is positioned in a hot spot. In the latter situation, the RF power limiter 104 ensures that these large amplitude RF antenna signals are attenuated by reflecting a large portion of the incoming RF signal power back to the microwave antenna for emission as discussed in further detail below.

FIG. 2 schematically illustrates a simplified schematic block diagram of a sensor assembly 205 in accordance with a third embodiment of the invention. Corresponding elements and features of the first and third embodiments of the sensor assembly have been assigned corresponding reference numerals to ease comparison, e.g. 202 in Fig. 2 corresponding to 102 in Fig. 1 - i.e. Fig. 1A) and/or Fig. 1B). The sensor assembly 205 comprises at least one energy consuming part comprising at least one sensor comprising a sensor 208. The sensor assembly 205 comprises an energy harvesting part configured to harvest energy from microwave radiation within the cooking chamber, the energy harvesting part comprising a microwave antenna 202. The sensor assembly 205 comprises an energy supply part configured to supply energy from the energy harvesting part to the at least one energy consuming part, the energy supply part comprising a dc power supply circuit 206.

The sensor assembly 205 comprises a microwave antenna 202 which may have identical characteristics to those of the microwave antenna 102 discussed above. An RF antenna signal is electrically coupled to the input of an optional RF power limiter 204 which may possess identical characteristics to those of the RF power limiter 104 discussed above. The output of the RF power limiter 204 is coupled to a DC power supply circuit 206 configured to rectify a limited RF antenna signal (V_{LIM}) and extract a DC power supply voltage (V_{DD}) therefrom as discussed above in connection with the first and second embodiments of the sensor assembly. The DC power supply voltage V_{DD} energizes or powers a sensor 208, a processing unit 214 such as a digital processor and a communication unit such as an optical data transmitter 218. The DC power supply voltage V_{DD} may be coupled or connected to respective power supply terminals or inputs of the sensor 208, processing unit 214 and optical data transmitter 218. Hence, these latter circuits are connected to the DC power supply voltage V_{DD} for receipt of operating power. The sensor 208 may comprise various types of active digital and/or analog electronic circuitry and/or display components that need power to function properly. The processing unit 214 may comprise a hard-wired processing unit configured to perform various predetermined control functions of the sensor assembly 205. In the alternative, the processing unit 214 may comprise a software programmable microprocessor adapted to perform the control functions of the sensor assembly 205 in accordance with a set of executable program instructions stored in program memory of the software programmable microprocessor. The processing unit 214 may comprise an input port connected to the sensor 208 for receipt of measured parameter values of the previously discussed first property (e.g. physical and/or chemical properties) of the first item. A sensory portion of the sensor 208 may be in physical or sensory contact with the first item to measure the first property of the first item during heating/preparation such as a temperature, viscosity, pressure, colour, humidity, electric conductivity etc. The skilled person will understand that the measured parameter values may be outputted by the sensor 208 in analog format or in digital format depending on the characteristics of the sensor 208 and any signal conditioning circuitry integrated with the sensor. If the parameter values are outputted in digital format, the input port of the processing unit 214 may comprise an ordinary I/O port or an industry standard data communication port such as I2C or SPI. If the parameter values are outputted by the sensor 208 in analog format, the input port of the processing unit 214 may comprise an analog input connected to an internal A/D converter to convert the received parameter values to a digital format and create a corresponding data stream or data signal comprising the measured parameter values. The optical data transmitter 218 is coupled to a data port of the processing unit 214 supplying the measured parameter values encoded in a predetermined data format to the optical data transmitter 218 for optical modulation and transmission to a suitable optical receiver (not shown) arranged at the outside of the oven chamber. The optical data transmitter 218 may comprise a modulated LED diode emitting the optical data signal by waves in the visible spectrum or in the infrared spectrum. The optical receiver may comprise a photodetector such as an LED. The processing unit 214 and optical data transmitter 218 may be configured to transmit the optical data signal continuously, at regular time intervals or at irregular time intervals during heating of the first item depending on the particular application. The sensor assembly 205 may comprise a housing or casing 210 surrounding and enclosing at least the RF power limiter 204, dc power supply circuit 206, processing unit 214, sensor 208 and optical data transmitter 218. The housing 210 may possess the same properties as the housing 110 discussed above.

The microwave oven may comprise a glass lid with an inner surface covered by a metallic net or grid which functions as an EMI shield of the oven to prevent leakage of the microwave radiation emitted by the oven during operation to the external environment outside the oven chamber. The photodetector may be attached directly on an outer surface of the glass lid of the microwave oven such that the optical data signal is transmitted through the glass lid to the photodetector. The photodetector may be placed in an opening of the EMI shield allowing the optical waves carrying the optical data signal unhindered propagation to the photodetector. The photodetector may be electrically or wirelessly coupled to a microprocessor of the microwave oven and transmit the received optical data signal, comprising the measured parameter values, to a controller of the microwave oven. The microprocessor of the microwave oven may be configured to use the received parameter values to automatically control the operation of the microwave oven. In one embodiment, the measured parameter values of the first item may comprise current temperatures of the first item and the microprocessor of the microwave oven may be configured to terminate the heating when the current temperature of the first item reaches a certain target temperature.

An embodiment of the sensor assembly 205 comprises a data memory, for example a non-volatile memory such as flash memory, for storage of a target temperature profile for heating of the first item. The processing unit 214 is configured to read the target temperature profile from the data memory and transmit the target temperature profile via the optical data transmitter 218, or another suitable communication unit, to the exterior of the oven chamber. The target temperature profile may for example be transmitted to the previously discussed photodetector attached to the outer surface of the glass lid of the microwave oven and therefrom to the microprocessor of the microwave oven. The temperature profile may specify a sequence of target temperatures over time for the heating of the first item. In certain embodiments, the target temperature profile may be formed by a single temperature value for example a stop or termination temperature of the first item. Hence, a control program of the microwave oven may initially receive and record this stop or termination temperature and thereafter monitoring incoming temperature values as repeatedly transmitted by the sensor assembly 205 during heating of the first item. In response to the measured temperature of the first item reaches the stored termination temperature, the control program of the microwave oven may terminate the heating of the microwave oven, or possibly markedly reducing the amount of emitted microwave energy in the oven chamber to avoid overheating the first item. Hence, the sensor assembly and the microwave oven jointly form an "intelligent" cooperating microwave heating system.

FIG. 3 schematically illustrates a simplified schematic block diagram of a sensor assembly 305 in accordance with a fourth embodiment of the invention. Corresponding elements and features of the third and fourth embodiments of the sensor assembly have been assigned corresponding reference numerals to ease comparison. The sensor assembly 305 comprises at least one energy consuming part comprising at least one sensor comprising a sensor 308. The sensor assembly 305 comprises an energy harvesting part configured to harvest energy from microwave radiation within the cooking chamber, the energy harvesting part comprising a microwave antenna 302. The sensor assembly 305 comprises an energy supply part configured to supply energy from the energy harvesting part to the at least one energy consuming part, the energy supply part comprising a dc power supply circuit 306.

The main difference between the present sensor assembly 305 and the previously discussed sensor assembly 205 is that the optical data transmitter 218 of the latter has been replaced by a display 312. The display 312 functions as a parameter indicator for displaying the measured parameter values of the physical or first property of the first item to the exterior of the oven chamber. The display 312 is also powered by a dc power supply voltage (V_{DD}) generated by a DC power supply circuit 306 of the sensor assembly 305. The skilled person will understand that the illustrated RF power limiter 304 may be an optional circuit and other embodiments may couple the RF antennal signal generated by the RF antenna 302 directly to the DC power supply circuit 306. The display 312 functions as a parameter indicator for displaying parameter values of the monitored first property or properties of the first item to the exterior of the oven chamber (not shown). The display 312 may be configured to indicate the measured parameter values with sufficient size and/or brightness to allow a user to read a current parameter value through a glass door or lid of the oven during operation of the oven. The display 312 may comprise various types of parameter value indicators such as a LED, multiple LEDs of different color, a loudspeaker, an alphanumeric display and E-ink paper. The sensor assembly 305 may comprise a housing or casing 310 surrounding and enclosing at least the RF power limiter 304, DC power supply circuit 306, processing unit 314, sensor 308 and display 312. The housing 210 may possess the same properties as the housing 110 discussed above.

The sensor assembly 105, 155, 205, 305 is configured to obtain first information indicative of availability of microwave radiation at the energy harvesting part. The sensor assembly 105, 155, 205, 305 is configured to control at least one energy consuming operation of at least one of the at least one energy consuming part in response to the first information.

The first information may comprise information (such as a temperature value) provided by the sensor 108, 208, 308. Accordingly, the first information may comprise information of an assumed future availability of microwave radiation at the energy harvesting part. The assumed future availability may for instance be based on a measured temperature value. It may be estimated whether (and possibly for how long time) further heating is expected and thus at which time microwave radiation is expected not to be available at the energy harvesting part any more. For instance, when the current temperature of the first item reaches a certain target temperature, it may be assumed that the availability of microwave energy is just about to be, or is, zero.

The first information may comprise information provided via the microwave antenna 102, 202, 302. Accordingly, the first information may comprise information of a detected availability of microwave radiation at the energy harvesting part.

Controlling at least one energy consuming operation may comprise decreasing energy consumption of the sensor 108, 208, 308. Controlling the at least one energy consuming operation may comprise controlling, such as decreasing, a measurement frequency of the first sensor 108, 208, 308. Decreasing a measurement frequency may decrease energy consumption. The sensor 108, 208, 308 may comprise appropriate means for carrying out the controlling and/or the controlling may be carried out by means of a processing unit which may be integrated with the sensor or may be separate from the sensor.

With reference to Fig. 2, controlling at least one energy consuming operation may comprise controlling when the processing unit 214 and optical data transmitter 218 shall transmit the optical data signal. For instance, transmission may be carried out less often when the availability of microwave energy at the energy harvesting part is low.

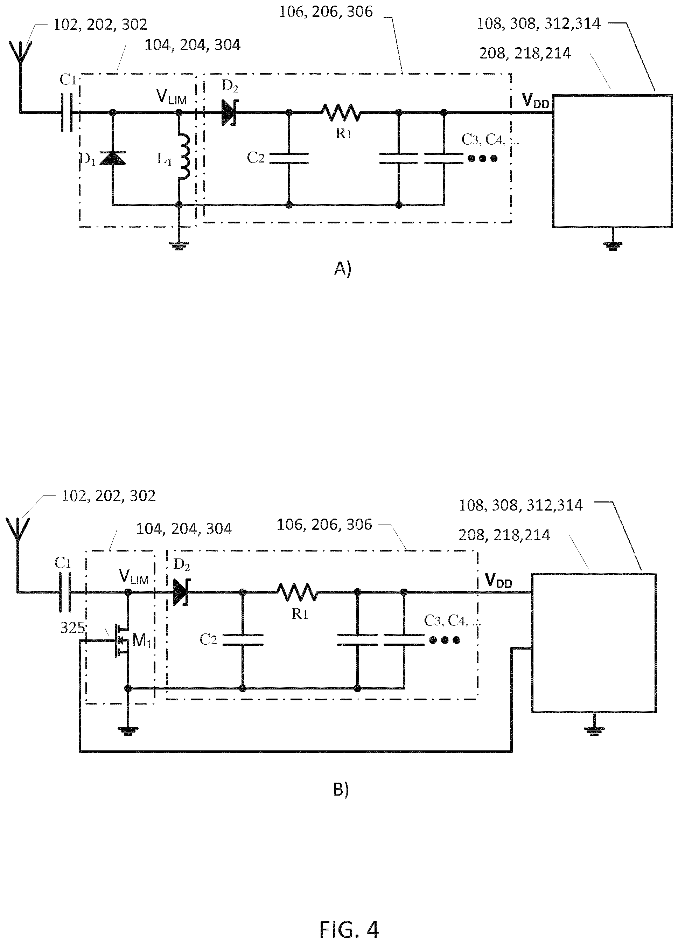

FIG. 4A) schematically illustrates a simplified electrical circuit diagram of a first exemplary RF power limiter 104, 204, 304 suitable for use in the above discussed second, third and fourth embodiments of the present sensor assembly 155, 205, 305 and DC power supply circuit 106, 206, 306 suitable for use in the above discussed first, second, third and fourth embodiments of the present sensor assembly 105, 155, 205, 305. The RF power limiter comprises a PIN limiter diode and a parallel inductor L1. The PIN limiter diode D1 is coupled from the RF antenna signal to ground of the RF power limiter and presents a variable shunt impedance to the microwave antenna 102, 202, 302 where the shunt impedance varies with a level of the incoming RF antenna signal. The RF power limiter therefore generates a limited or attenuated RF antenna signal (V_{LIM}) compared to the RF antenna signal produced at the output of the microwave antenna 102, 202, 302. The limited RF antenna signal V_{LIM} is applied to the input of the DC power supply circuit 106, 206,306, in particular to a cathode of a rectifying element in form of Schottky diode D₂. The parallel inductor ensures proper DC biasing of the PIN limiter diode D1. The impedance of the PIN limiter diode is relatively large, for example larger than 1000 ohm, for small levels of the RF antenna signal and gradually decreases with increasing level of the RF antenna signal such that the input impedance of the RF power limiter behaves in a corresponding manner. In one exemplary embodiment, the generator impedance of the microwave antenna may be about 1000 ohm, the input impedance of the dc power supply about 200 ohm and the impedance of the PIN limiter diode above 1000 ohm for small levels of the RF antenna signal. With increasing level of the RF antenna signal the impedance of the PIN limiter diode may gradually decrease to reach a value of about 50 ohm or even smaller for large levels of the RF antenna signal. Hence, the impedance matching between the microwave antenna and the RF power limiter is gradually deteriorating with increasing level of the RF antenna signal. Consequently, as the level of the RF antenna signal increases an increasing portion of the RF antenna signal is reflected back to the microwave antenna and emitted therefrom. Hence, shielding the components of the dc power supply circuit against excessive RF voltage levels and power levels which could lead to the previously discussed overvoltage and/or overheating problems for large levels of the RF antenna signal.

FIG. 4B) schematically illustrates a simplified electrical circuit diagram of a second exemplary RF power limiter 104, 204, 304 and DC power supply circuit 106, 206, 306 suitable for use in any of the above discussed first, second, third, and/or fourth embodiments of the present sensor assembly. The RF power limiter comprises a controllable MOSFET transistor M₁. The controllable MOSFET M₁ is coupled from the RF antenna signal to ground of the RF power limiter and presents a variable shunt impedance to the microwave antenna where the impedance varies in accordance with the level of the incoming RF antenna signal. However, while the impedance characteristics and signal limiting characteristics of the PIN limiter diode is fixed by the intrinsic parameters of the PIN diode itself, the signal limiting characteristics of the MOSFET M₁ can be accurately controlled by the processing unit 214, 314 by controlling or adjusting a gate voltage of the gate/control terminal 325 of M₁. This feature provides considerable flexibility in the selection or adaptation of the impedance characteristics, and thereby signal limiting characteristics, of the present embodiment of the RF power limiter. The processing unit 214, 314 may for example monitor the level of dc power supply voltage V_{DD} via a suitable input port. Accordingly, the first information may comprise information provided via the energy harvesting part. Accordingly, the first information may comprise information of a detected availability of microwave radiation at the energy harvesting part.

Accordingly, the processing unit may decrease energy consumption of at least one of the at least one energy consuming part. The processing unit may be configured to abruptly or gradually decrease the impedance of M₁ via adjustment of the gate voltage of M₁ when the dc power supply voltage V_{DD} meets a certain criterion for example reaches a predefined threshold level. The latter may indicate a nominal DC voltage of the supply or indicate a fully charged state of the DC power supply circuit 106, 206, 306 such that the amount of incoming power from the RF antenna signal could advantageously be lowered to avoid the previously discussed potentially harmful overvoltage conditions in the dc power supply circuit. The processing unit may control the impedance of M₁ such that it remains substantially constant below the predefined threshold level and decreases to a smaller impedance above the threshold level. The smaller impedance of M₁ above the predefined threshold level may either be substantially constant or variable such that the impedance gradually decreases with increasing dc power supply voltage.

FIG. 5 schematically illustrates an exemplary container in the form of an intravenous infusion fluid bag 500 which may contain various types of first items in liquid or solid frozen form. The first item may include a pharmaceutical composition or active agents. The intravenous infusion fluid bag 500 may comprise an integrated sensor assembly 105, 155, 205, 305 in accordance with any of the above described embodiments thereof as discussed in additional detail below. The intravenous infusion fluid bag 500 may be designed for use in consumer type of microwave ovens using 2.45 GHz microwave radiation. The intravenous infusion fluid bag 500 may contain a predesignated area 502 for post-manufacturing attachment of the sensor assembly 105, 155, 205, 305.

The intravenous infusion fluid bag 500 may comprise an eye or hole 510 to affix the bag to a mating structure of a pole. The intravenous infusion fluid bag 500 furthermore comprises a liquid flow channel (not shown) for delivery of the liquid first item to an IV line or tubing. The intravenous infusion fluid bag 500 (IV bag) may be manufactured in plastics, silicone, rubber or similar elastomeric materials.

FIG. 6 schematically illustrates a cross-sectional view of the previously discussed intravenous infusion fluid bag 500 together with an enlarged cross-sectional view 550 of a wall area to which the sensor assembly 105, 155, 205, 305 is attached. In the present embodiment, the sensor assembly is releasably attached to an outer surface of the predesignated area 502 for example by a gluing agent or an elastomeric band etc. This attachment mechanism supports reuse of the sensor assembly where the sensor assembly is dismantled after the intravenous infusion fluid bag 500 has been heated and before being disposed of. This reduces the long-term costs associated with the use of intravenous infusion fluid bags with a sensor assembly in accordance with the present invention.

The sensor 108, 208, 308 of the sensor assembly may be brought into physical contact with the outer surface of the predesignated area 502 of the wall of the container - for example to reduce the thermal resistance between the first item and the sensor.

The sensor assembly 105, 155, 205, 305 may comprise a relatively short monopole microwave antenna (not shown in Fig. 6). The tuning frequency of the monopole microwave antenna may be somewhat higher than the expected 2.45 GHz radiation frequency of the microwave radiation emitted by the microwave oven. Hence, the monopole microwave antenna is deliberately detuned which offers several advantages. A higher tuning frequency of the monopole microwave antenna relative to at tuning at the 2.45 GHz microwave radiation frequency leads to smaller physical dimensions. The smaller physical dimensions leads to smaller dimensions of the sensor assembly and simper integration into the various kinds of equipment such as the present intravenous infusion fluid bag 500. The detuning also decreases the amount of microwave energy picked-up by the monopole microwave antenna and therefore decreases the level of the RF antenna signal level applied to either the RF power limiter (if present) and to the DC power supply circuit. The tuning frequency of the monopole microwave antenna relative to at tuning at the 2.45 GHz microwave radiation frequency may be at least 50 % higher leading to a turning frequency of the monopole microwave antenna at or above 3.675 GHz. The sensor assembly may further comprise a communication unit (not shown in Fig. 6) for example an optical data transmitter as discussed above. The communication unit is configured to emit a wireless electromagnetic data signal comprising repeatedly measured temperature values of the liquid first item held in the bag 500 as produced by the temperature sensor 108, 208, 308 during heating of the first item in the microwave oven. If an optical data transmitter is used, the generated optical data signal may be infrared and possess a sufficiently large level or power to penetrate the oven door to reach an optical receiver placed outside the oven chamber as discussed above. The skilled person will understand that the optical data transmitter may be replaced by, or supplemented by, a display such as the display 312 discussed above. The display may indicate the measured temperature values of the liquid first item or simply indicate that a certain preprogramed target temperature of the the the liquid first item is reached to the exterior of the oven chamber. The user may monitor the current temperature of the the liquid first item by reading temperature indications on the display during heating and manually interrupt the microwave oven when the target or desired temperature is reached. In the alternative, the previously discussed microprocessor of the microwave oven may be configured to automatically interrupt the heating of the microwave oven when the desired temperature is reached. This requires that the optical data signal transmitted by the sensor assembly is coupled to the microprocessor of the microwave oven via the photodetector. The photodetector may be mounted on the exterior of the oven door or alternatively positioned within the microwave oven for example viewing into the oven chamber through an aperture or shielding mesh.

FIG. 7 schematically illustrates a cross-sectional view of an alternative embodiment 700 similar to the previously discussed intravenous infusion fluid bag 500 together with an enlarged cross-sectional view 750 of a wall area of the embodiment 700 into which the sensor assembly 105, 155, 205, 305 is integrated. In the present embodiment, the sensor assembly 105, 155, 205, 305 is completely embedded within the bag wall 723. This may be accomplished by various types of manufacturing techniques such as injection molding, overmolding, welding etc.

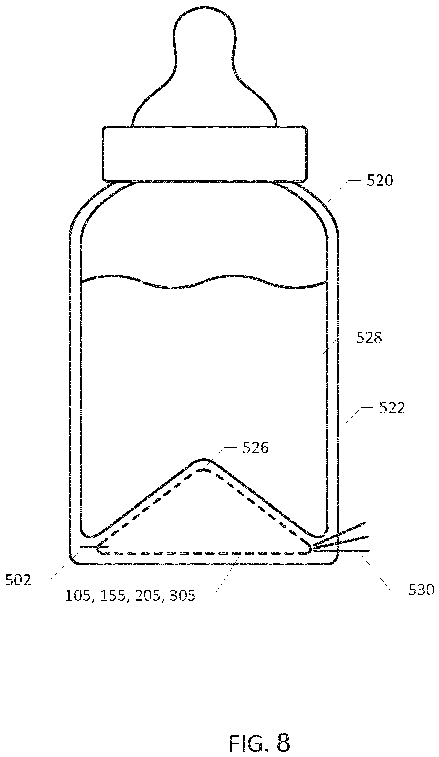

FIG. 8 shows a first exemplary food container 520 which comprises a baby bottle. The baby bottle contains a portion of infant formula 528. The baby bottle 520 comprises an integrated sensor assembly 105, 155, 205, 305 in accordance with any of the above embodiments thereof. The baby bottle 520 is designed for use in consumer type of microwave ovens using 2.45 GHz microwave radiation. The sensor assembly preferably comprises housing or casing surrounding and enclosing the previously discussed circuits of the integrated sensor assembly. The housing may possess the same properties as the housing 110 discussed above in connection with the first embodiment of the sensor assembly 105. The sensor assembly is arranged in a bottom section of a bottle wall 522 of the baby bottle 520. The bottle wall 522 may comprise polycarbonate and therefore be fairly transparent to infrared light and/or visible light. A temperature sensor 526 protrudes from the housing of the sensor assembly to achieve physical contact with the infant formula 528 and measure its current temperature. In the alternative, the temperature sensor 526 may be arranged inside the housing and obtain thermal contact with the infant formula 528 through a suitable material interface. The sensor assembly comprises a relatively short monopole microwave antenna 502. The tuning frequency of the monopole microwave antenna 502 is preferably somewhat higher than the 2.45 GHz radiation frequency of microwave radiation of the microwave oven. Hence, the monopole microwave antenna 502 is deliberately detuned which offers several advantages. The higher tuning frequency of the monopole microwave antenna 502 relative to at tuning at the 2.45 GHz microwave radiation frequency leads to smaller physical dimensions of the monopole microwave antenna 502. The smaller physical dimensions leads to smaller dimensions of the sensor assembly and simper integration into the various kinds of equipment such as the present infant bottle 510. The detuning also decreases the amount of microwave energy picked-up by the monopole microwave antenna 502 and therefore decreases the level of the RF antenna signal level applied to either the RF power limiter 204, 304 (if present) and to the dc power supply circuit 206, 306. The tuning frequency of the monopole microwave antenna 502 relative to at tuning at the 2.45 GHz microwave radiation frequency may be at least 50 % higher leading to a turning frequency of the monopole microwave antenna 502 at or above 3.675 GHz in the present embodiment. The sensor assembly comprises further comprises an optical data transmitter as discussed in connection with the third embodiment of the sensor assembly 205. The optical data transmitter is configured to emit an optical data signal 530 comprising measured temperature values of the infant formula 528 as produced by the temperature sensor 526 during heating of the baby bottle in the oven. The optical data signal 530 may be infrared and has a sufficiently large level or power to penetrate the bottle wall 522 and penetrate an oven door to reach an optical receiver placed outside the oven chamber as discussed above. The skilled person will understand that the optical data transmitter may be replaced by, or supplemented by, a display such as the display 312 discussed above. The display may indicate the measured temperature values of the infant formula 528 or simply indicate that a certain preprogramed target temperature of the infant formula is reached to the exterior of the oven chamber. The user may monitor the current temperature of the infant formula by reading temperature indications on the display during heating and interrupt the oven when a desired temperature is reached. In the alternative, the previously discussed microprocessor of the microwave oven may be configured to automatically interrupt the heating of the microwave oven when the desired temperature is reached. This requires that the optical data signal transmitted by the sensor assembly is coupled to the microprocessor of the microwave oven via the photodetector mounted on the oven door as discussed above.

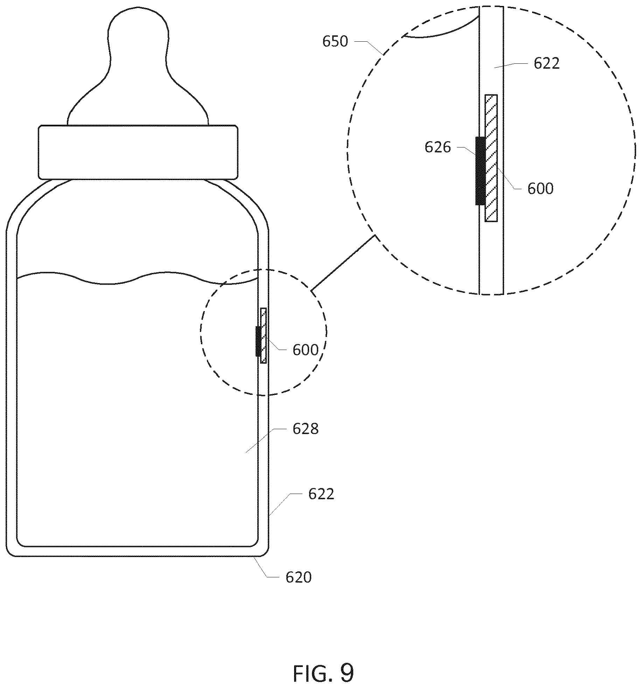

FIG. 9 shows a second exemplary food container 620 for example in the form of a baby bottle. The food container 620 comprises a sensor assembly 600 in accordance with any of the above described embodiments 105, 155, 205, 305 thereof. The sensor assembly 600 is partially, or fully, embedded in a wall section 622 of the container material or possibly other container sections. The sensor assembly 600 may have been embedded in the wall section 615 of the food container 620 using manufacturing techniques such as injection molding or by overmolding. The food container 620 may comprise various types of injection molding compatible materials. A sensor 626, for example a temperature sensor or a chemical sensor, of the sensor assembly 600 is arranged to obtain physical contact with a food item 628 (e.g. baby formula) held in the food container 620. The zoomed drawing section 650 of the wall section 622 surrounding the sensor assembly 600 illustrates how the sensor 626 at least partly protrudes to the outside of inner surface of the wall material to obtain physical contact with the food item 628.

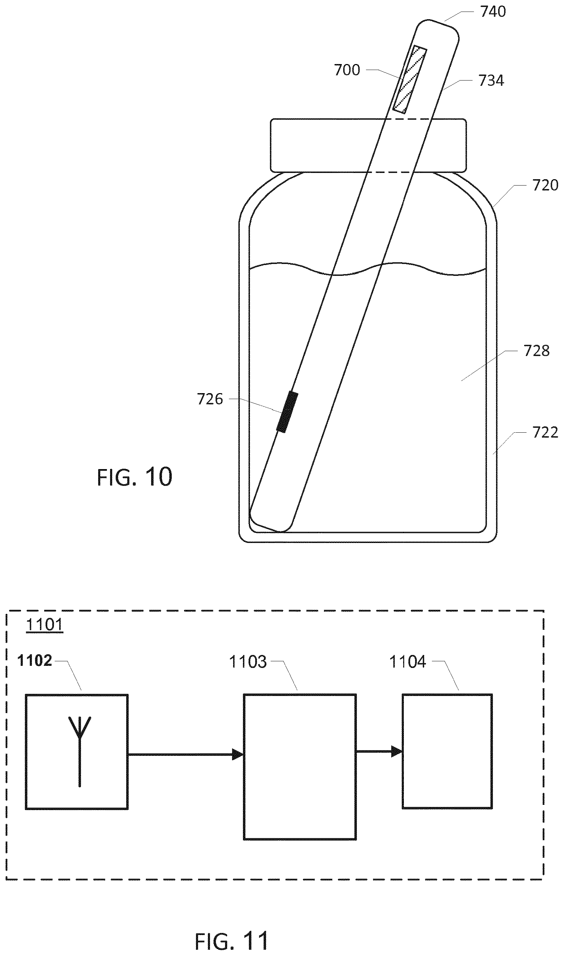

FIG. 10 shows an exemplary temperature probe 740 comprising a sensor assembly according to any of the previously-discussed embodiments 105, 155, 205, 305 thereof. The temperature probe 740 possesses numerous uses and may for example be inserted into a food item 728 held in a food container 720 such as a cup, bottle etc. in connection with microwave heating of the food item 728. The sensor assembly comprises a main portion 700 and a sensor portion 726 arranged physically separate from the main portion 700. The separate sensor portion 726 may be electrically connected to the main portion 700 via one or more electrical conductors or wires. Alternatively, the sensor portion 726 and main portion 700 may be connected via a wireless data communication link. The sensor assembly is preferably enclosed or arranged within a housing or casing 734 of the temperature probe 740 for example an elongate cylindrical housing to facilitate end user manipulation and handling. The temperature probe 740 may be inserted in the food item 728 during use such that at least the sensor portion 726 is embedded in the food item 728 to accurately measure the relevant physical and/or chemical properties of the food item 728 during its heating in the microwave oven chamber.

Fig. 11 schematically illustrates an embodiment of a sensor assembly 1101 according to the present invention. The sensor assembly 1101 comprises at least one energy consuming part 1104 comprising at least one sensor. The sensor assembly 1101 comprises an energy harvesting part 1102 configured to harvest energy from microwave radiation within the cooking chamber. The sensor assembly 1101 comprises an energy supply part 1103 configured to supply energy from the energy harvesting part to the at least one energy consuming part. The sensor assembly 1101 may be provided in connection with any of the embodiments disclosed in connection with Figs. 6 to 10, e.g. instead of any of the sensor assemblies 105, 155, 205, 305, etc.

The at least one energy consuming part 1104 may comprise at least one communication unit comprising a first communication unit configured to receive signals.

The sensor assembly 1101 is configured to obtain first information indicative of availability of microwave radiation at the energy harvesting part.

The sensor assembly 1101 is configured to control at least one energy consuming operation of at least one of the at least one energy consuming part in response to the first information.

The first information may comprise information provided via the first communication unit. Accordingly, the first information may comprise information of at least one or more parts of a scheduled availability of microwave radiation at the energy harvesting part.

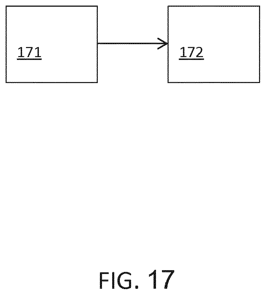

Fig. 17 schematically illustrates a method according to the present invention for controlling energy consumption of a sensor assembly for a cooking chamber of a microwave oven, the sensor assembly comprising:
- at least one energy consuming part comprising at least one sensor comprising a first sensor configured to measure a first property of a first item in the cooking chamber;
- an energy harvesting part configured to harvest energy from microwave radiation within the cooking chamber, the energy harvesting part comprising a microwave antenna having a predetermined tuning frequency for generating an RF antenna signal in response to microwave radiation at a predetermined excitation frequency; and
- an energy supply part configured to supply energy from the energy harvesting part to the at least one energy consuming part, the energy supply part comprising a dc power supply circuit coupled to the RF antenna signal, the dc power supply circuit being configured to produce a power supply voltage by rectifying and extracting energy from the RF antenna signal;
the method comprising:
- obtaining 171 first information indicative of availability of microwave radiation at the energy harvesting part; and
- controlling 172 at least one energy consuming operation of at least one of the at least one energy consuming part in response to of the first information.

Although particular embodiments have been shown and described, it shall be understood that they are not intended to limit the claimed invention, and it is obvious to those skilled in the art that various changes and modifications may be made without departing from the scope of the claimed invention. The disclosure (including drawings) is, accordingly, to be regarded in an illustrative rather than a restrictive sense. The claimed invention is intended to cover alternatives, modifications, and eauivalents, provided they fall within the scope of the following claims

## Claims

1. A sensor assembly (105, 155, 205, 305, 1101) for a cooking chamber of a microwave oven, the sensor assembly comprising:
at least one energy consuming part (1104) comprising at least one sensor (108, 208, 308) comprising a first sensor configured to measure a first property of a first item in the cooking chamber;
an energy harvesting part (1102) configured to harvest energy from microwave radiation within the cooking chamber, the energy harvesting part comprising a microwave antenna (102, 202, 302) having a predetermined tuning frequency for generating an RF antenna signal in response to microwave radiation at a predetermined excitation frequency; and
an energy supply part (1103) configured to supply energy from the energy harvesting part (1102) to the at least one energy consuming part (1104), the energy supply part (1103) comprising a dc power supply circuit (106, 206, 306) coupled to the RF antenna signal, the dc power supply circuit (106, 206, 306) being configured to produce a power supply voltage by rectifying and extracting energy from the RF antenna signal;
**characterised in that**
the sensor assembly (105, 155, 205, 305, 1101) being configured to:
obtain first information indicative of availability of microwave radiation at the energy harvesting part (1102); and
control at least one energy consuming operation of at least one of the at least one energy consuming part (1104) in response to the first information.

2. A sensor assembly (105, 155, 205, 305, 1101) according to claim 1, wherein the first information comprises information provided via the energy harvesting part (1102).

3. A sensor assembly (105, 155, 205, 305, 1101) according to claim 1 or 2, wherein the first information comprises information provided by at least one of the at least one sensor (108, 208, 308).

4. A sensor assembly (105, 155, 205, 305, 1101) according to any of the preceding claims, wherein the at least one energy consuming part (1104) comprises at least one communication unit comprising a first communication unit configured to send and/or receive signals.

5. A sensor assembly (105, 155, 205, 305, 1101) according to claim 4, wherein the first communication unit is configured to communicate wireless.

6. A sensor assembly (105, 155, 205, 305, 1101) according to claim 4 or 5, wherein the first communication unit is configured to receive signals, and wherein the first information comprises information provided via the first communication unit.

7. A sensor assembly (105, 155, 205, 305, 1101) according to any of the preceding claims, wherein the first information comprises information of a detected availability of microwave radiation at the energy harvesting part.

8. A sensor assembly (105, 155, 205, 305, 1101) according to any of the preceding claims, wherein the first information comprises information of an assumed future availability of microwave radiation at the energy harvesting part.

9. A sensor assembly (105, 155, 205, 305, 1101) according to any of the preceding claims, wherein the first information comprises information of at least one or more parts of a scheduled availability of microwave radiation at the energy harvesting part.

10. A sensor assembly (105, 155, 205, 305, 1101) according to any of the preceding claims, wherein controlling at least one energy consuming operation comprises decreasing energy consumption of the at least one of the at least one energy consuming part.

11. A sensor assembly (105, 155, 205, 305, 1101) according to any of the preceding claims, wherein the first property is a physical property and/or a chemical property and wherein the first item is a food item or a medical item.

12. A sensor assembly (105, 155, 205, 305, 1101) according to any of the preceding claims, wherein the at least one energy consuming part comprises at least one processing unit (214, 314) including a first processing unit configured to process measurements from the at least one sensor (108, 208, 308).

13. A sensor assembly (105, 155, 205, 305, 1101) according to any of the preceding claims, wherein controlling the at least one energy consuming operation comprises controlling a measurement frequency of the first sensor (108, 208, 308).

14. A method for controlling energy consumption of a sensor assembly (105, 155, 205, 305, 1101) according to any of the preceding claims,
the method comprising:
obtaining first information indicative of availability of microwave radiation at the energy harvesting part (1102); and
controlling at least one energy consuming operation of at least one of the at least one energy consuming part (1104) in response to the first information.

## Patentansprüche

1. Sensoranordnung (105, 155, 205, 305, 1101) für einen Garraum eines Mikrowellenherds, wobei die Sensoranordnung umfasst:
mindestens ein Energieverbrauchsteil (1104) umfassend mindestens einen Sensor (108, 208, 308), der einen ersten Sensor umfasst, der konfiguriert ist, um eine erste Eigenschaft eines ersten Gegenstands in dem Garraum zu messen;
ein Energiegewinnungsteil (1102), das konfiguriert ist, um Energie aus Mikrowellenstrahlung innerhalb des Garraums zu gewinnen, wobei das Energiegewinnungsteil eine Mikrowellenantenne (102, 202, 302) umfasst, die eine vorbestimmten Abstimmfrequenz zum Erzeugen eines HF-Antennensignals als Reaktion auf Mikrowellenstrahlung bei einer vorbestimmten Anregungsfrequenz aufweist; und
ein Energieversorgungsteil (1103), das konfiguriert ist, um Energie von dem Energiegewinnungsteil (1102) an das mindestens einen Energieverbrauchsteil (1104) zu versorgen, wobei das Energieversorgungsteil (1103) eine Gleichstromversorgungsschaltung (106, 206, 306) umfasst, die mit dem HF-Antennensignal gekoppelt ist, wobei die Gleichstromversorgungsschaltung (106, 206, 306) konfiguriert ist, um eine Versorgungsspannung durch Gleichrichten und Extrahieren von Energie aus dem HF-Antennensignal zu erzeugen;
**dadurch gekennzeichnet, dass**
die Sensoranordnung (105, 155, 205, 305, 1101) konfiguriert ist, um:
erste Informationen zu erhalten, die die Verfügbarkeit von Mikrowellenstrahlung am Energiegewinnungsteil (1102) anzeigen; und
mindestens einen Energieverbrauchsvorgang von mindestens einem des mindestens einen Energieverbrauchsteils (1104) als Reaktion auf die ersten Informationen zu steuern.

2. Sensoranordnung (105, 155, 205, 305, 1101) nach Anspruch 1, wobei die ersten Informationen Informationen umfassen, die über das Energiegewinnungsteil (1102) bereitgestellt werden.

3. Sensoranordnung (105, 155, 205, 305, 1101) nach Anspruch 1 oder 2, wobei die ersten Informationen Informationen umfassen, die von mindestens einem des mindestens einen Sensors (108, 208, 308) bereitgestellt werden.

4. Sensoranordnung (105, 155, 205, 305, 1101) nach einem der vorstehenden Ansprüche, wobei das mindestens eine Energieverbrauchsteil (1104) mindestens eine Kommunikationseinheit umfasst, die eine erste Kommunikationseinheit umfasst, die zum Senden und/oder Empfangen von Signalen konfiguriert ist.

5. Sensoranordnung (105, 155, 205, 305, 1101) nach Anspruch 4, wobei die erste Kommunikationseinheit zur drahtlosen Kommunikation konfiguriert ist.

6. Sensoranordnung (105, 155, 205, 305, 1101) nach Anspruch 4 oder 5, wobei die erste Kommunikationseinheit konfiguriert ist, um Signale zu empfangen, und wobei die ersten Informationen Informationen umfassen, die über die erste Kommunikationseinheit bereitgestellt werden.

7. Sensoranordnung (105, 155, 205, 305, 1101) nach einem der vorstehenden Ansprüche, wobei die ersten Informationen Informationen über eine erkannte Verfügbarkeit von Mikrowellenstrahlung am Energiegewinnungsteil umfassen.

8. Sensoranordnung (105, 155, 205, 305, 1101) nach einem der vorstehenden Ansprüche, wobei die ersten Informationen Informationen über eine angenommene zukünftige Verfügbarkeit von Mikrowellenstrahlung am Energiegewinnungsteil umfassen.

9. Sensoranordnung (105, 155, 205, 305, 1101) nach einem der vorstehenden Ansprüche, wobei die ersten Informationen Informationen über mindestens einen oder mehrere Teile einer geplanten Verfügbarkeit von Mikrowellenstrahlung am Energiegewinnungsteil umfassen.

10. Sensoranordnung (105, 155, 205, 305, 1101) nach einem der vorstehenden Ansprüche, wobei das Steuern mindestens eines Energieverbrauchsvorgangs das Verringern des Energieverbrauchs des mindestens einen des mindestens einen Energieverbrauchsteils umfasst.

11. Sensoranordnung (105, 155, 205, 305, 1101) nach einem der vorstehenden Ansprüche, wobei die erste Eigenschaft eine physikalische Eigenschaft und/oder eine chemische Eigenschaft ist und wobei der erste Gegenstand ein Lebensmittel oder ein medizinischer Gegenstand ist.

12. Sensoranordnung (105, 155, 205, 305, 1101) nach einem der vorstehenden Ansprüche, wobei das mindestens eine Energieverbrauchsteil mindestens eine Verarbeitungseinheit (214, 314) einschließlich einer ersten Verarbeitungseinheit umfasst, die konfiguriert ist, um Messungen von dem mindestens einen Sensor (108, 208, 308) zu verarbeiten.

13. Sensoranordnung (105, 155, 205, 305, 1101) nach einem der vorstehenden Ansprüche, wobei das Steuern des mindestens einen Energieverbrauchsvorgangs das Steuern einer Messfrequenz des ersten Sensors (108, 208, 308) umfasst.

14. Verfahren zum Steuern des Energieverbrauchs einer Sensoranordnung (105, 155, 205, 305, 1101) nach einem der vorstehenden Ansprüche,
wobei das Verfahren umfasst:
Erhalten von ersten Informationen, die die Verfügbarkeit von Mikrowellenstrahlung am Energiegewinnungsteil (1102) anzeigen; und
Steuern mindestens eines Energieverbrauchsvorgangs von mindestens einem des mindestens einen Energieverbrauchsteils (1104) als Reaktion auf die ersten Informationen.

## Revendications

1. Ensemble capteur (105, 155, 205, 305, 1101) pour une chambre de cuisson d'un four à micro-ondes, l'ensemble capteur comprenant :
au moins une partie de consommation d'énergie (1104) comprenant au moins un capteur (108, 208, 308) comprenant un premier capteur configuré pour mesurer une première propriété d'un premier article dans la chambre de cuisson ;
une partie de collecte d'énergie (1102) configurée pour collecter de l'énergie à partir d'un rayonnement micro-ondes dans la chambre de cuisson, la partie de collecte d'énergie comprenant une antenne à micro-ondes (102, 202, 302) ayant une fréquence de syntonisation prédéterminée pour générer un signal d'antenne RF en réponse à un rayonnement micro-ondes à une fréquence d'excitation prédéterminée ; et
une partie d'alimentation en énergie (1103) configurée pour fournir de l'énergie provenant de la partie de collecte d'énergie (1102) à la au moins une partie de consommation d'énergie (1104), la partie d'alimentation en énergie (1103) comprenant un circuit d'alimentation en courant continu (106, 206, 306) couplé au signal d'antenne RF, le circuit d'alimentation en courant continu (106, 206, 306) étant configuré pour produire une tension d'alimentation en redressant et en extrayant de l'énergie du signal d'antenne RF ;
**caractérisé en ce que**
l'ensemble de capteur (105, 155, 205, 305, 1101) étant configuré pour :
obtenir des premières informations indiquant une disponibilité de rayonnement micro-ondes au niveau de la partie de collecte d'énergie (1102) ; et
commander au moins une opération de consommation d'énergie d'au moins une de la au moins une partie de consommation d'énergie (1104) en réponse aux premières informations.

2. Ensemble capteur (105, 155, 205, 305, 1101) selon la revendication 1, dans lequel les premières informations comprennent des informations fournies via la partie de collecte d'énergie (1102).

3. Ensemble capteur (105, 155, 205, 305, 1101) selon la revendication 1 ou 2, dans lequel les premières informations comprennent des informations fournies par au moins l'une du au moins un capteur (108, 208, 308).

4. Ensemble capteur (105, 155, 205, 305, 1101) selon l'une quelconque des revendications précédentes, dans lequel la au moins une partie de consommation d'énergie (1104) comprend au moins une unité de communication comprenant une première unité de communication configurée pour envoyer et/ou recevoir des signaux.

5. Ensemble capteur (105, 155, 205, 305, 1101) selon la revendication 4, dans lequel la première unité de communication est configurée pour communiquer sans fil.

6. Ensemble capteur (105, 155, 205, 305, 1101) selon la revendication 4 ou 5, dans lequel la première unité de communication est configurée pour recevoir des signaux, et dans lequel les premières informations comprennent des informations fournies via la première unité de communication.

7. Ensemble capteur (105, 155, 205, 305, 1101) selon l'une quelconque des revendications précédentes, dans lequel les premières informations comprennent des informations d'une disponibilité de rayonnement micro-ondes détectée au niveau de la partie de collecte d'énergie.

8. Ensemble capteur (105, 155, 205, 305, 1101) selon l'une quelconque des revendications précédentes, dans lequel les premières informations comprennent des informations d'une disponibilité de rayonnement micro-ondes future supposée au niveau de la partie de collecte d'énergie.

9. Ensemble capteur (105, 155, 205, 305, 1101) selon l'une quelconque des revendications précédentes, dans lequel les premières informations comprennent des informations d'au moins une ou plusieurs parties d'une disponibilité de rayonnement micro-ondes programmée au niveau de la partie de collecte d'énergie.

10. Ensemble capteur (105, 155, 205, 305, 1101) selon l'une quelconque des revendications précédentes, dans lequel la commande d'au moins une opération de consommation d'énergie comprend une diminution d'une consommation d'énergie de la au moins une de la au moins une partie de consommation d'énergie.

11. Ensemble capteur (105, 155, 205, 305, 1101) selon l'une quelconque des revendications précédentes, dans lequel la première propriété est une propriété physique et/ou une propriété chimique et dans lequel le premier article est un aliment ou un article médical.

12. Ensemble capteur (105, 155, 205, 305, 1101) selon l'une quelconque des revendications précédentes, dans lequel la au moins une partie de consommation d'énergie comprend au moins une unité de traitement (214, 314) incluant une première unité de traitement configurée pour traiter des mesures provenant du au moins un capteur (108, 208, 308).

13. Ensemble capteur (105, 155, 205, 305, 1101) selon l'une quelconque des revendications précédentes, dans lequel la commande de la au moins une opération de consommation d'énergie comprend une commande d'une fréquence de mesure du premier capteur (108, 208, 308).

14. Procédé pour commander une consommation d'énergie d'un ensemble capteur (105, 155, 205, 305, 1101) selon l'une quelconque des revendications précédentes,
le procédé comprenant les étapes consistant à :
obtenir des premières informations indiquant une disponibilité de rayonnement micro-ondes au niveau de la partie de collecte d'énergie (1102) ; et
commander au moins une opération de consommation d'énergie d'au moins une de la au moins une partie de consommation d'énergie (1104) en réponse aux premières informations.
